# EUROPEAN PATENT SPECIFICATION

(11) **EP 4 119 404 B1**
(45) Date of publication and mention of the grant of the patent: **03.06.2026**
(21) Application number: 21767022.3
(22) Date of filing: 08.03.2021
(51) Int. Cl.: B60T 13/74, B60T 13/66, B60T 17/22

(54) **PARKING REDUNDANCY CONTROL METHOD, AUTOMATIC DRIVING SYSTEM, AND DRIVING DEVICE**
PARKREDUNDANZSTEUERUNGSVERFAHREN, AUTOMATISCHES ANTRIEBSSYSTEM UND ANTRIEBSVORRICHTUNG
PROCÉDÉ DE COMMANDE DE REDONDANCE DE STATIONNEMENT, SYSTÈME DE CONDUITE AUTOMATIQUE ET DISPOSITIF DE CONDUITE

(30) Priority: 11.03.2020 CN 202010165744
(43) Date of publication of application: 18.01.2023
(73) Proprietor: China Faw Co., Ltd., Changchun, Jilin 130011 (CN)
(72) Inventor: SUI, Qinghai, Changchun, Jilin 130011 (CN); GUAN, Hao, Changchun, Jilin 130011 (CN); HAO, Zhanwu, Changchun, Jilin 130011 (CN); LIU, Zhipeng, Changchun, Jilin 130011 (CN); XU, Hualin, Changchun, Jilin 130011 (CN)
(74) Representative: Novagraaf Group
(86) International application number: PCT/CN2021/079541
(87) International publication number: WO 2021/180036

(56) References cited:
- CN-A- 107 757 593
- CN-A- 107 757 593
- CN-A- 109 229 081
- CN-A- 109 634 259
- CN-A- 110 435 626
- CN-A- 111 252 079
- CN-U- 207 725 389
- CN-U- 209 870 362
- DE-A1- 102007 059 684
- US-A1- 2018 229 738
- US-A1- 2019 077 401

## Description

### Cross-Reference to Related Application

The present invention claims priority to Chinese Patent Application No. 202010165744.4, filed to the China National Intellectual Property Administration on March 11, 2020.

### Technical Field

Embodiments of present invention relate to the field of automatic driving technologies, and in particular to a parking redundancy control method, an automatic driving system, and a driving device.

### Background

With the gradual maturity of an automatic driving technology, more and more vehicles are equipped with automatic driving systems above level three (L3). Automatic driving also puts forward new requirements for a conventional parking brake system. The parking brake system simultaneously has two sets of different parts to achieve safe parking of the vehicles. Currently, there is no mature parking redundancy control method for high-speed automatic driving systems.

CN 110435626A, DE 102007059684A1, CN 107757593A, CN 207725389U and CN 209870362U provide respective technical solutions; however, the above mentioned problem still remains unsolved.

### Summary

At least some embodiments of the present invention provide a parking redundancy control method, an automatic driving system, and a driving device, so as at least to achieve, without extra adding a hardware mechanism, the safe parking of a vehicle in a case that the vehicle is in an automatic driving and travel state and before a driver takes over the vehicle.

An embodiment of present invention provides a parking redundancy control method, applicable to an automatic driving system. Multiple components in the automatic driving system include an automatic driving main controller, an automatic driving auxiliary controller, a main brake controller, a backup brake controller, an electronic parking controller, a P-gear controller, a gateway, and a Controller Area Network (CAN) communication network. The CAN communication network includes an intelligent driving main CAN, a chassis main CAN, and a chassis backup CAN. The method includes: after a vehicle is determined to be parked, simultaneously sending, by the automatic driving main controller and the automatic driving auxiliary controller, a first safe parking request to the main brake controller, where the first safe parking request includes: a parking instruction that is sent by the automatic driving main controller and the automatic driving auxiliary controller by means of the intelligent driving main CAN, the gateway, and the chassis main CAN sequentially, and a parking instruction that is sent by the automatic driving main controller by means of the chassis backup CAN; determining whether the multiple components in the automatic driving system are normal; in response to a determination result indicating that the multiple components are normal, sending, by the main brake controller, an electronic parking request to the electronic parking controller based on the first safe parking request and sending a P-gear request to the P-gear controller, to cause the automatic driving system to complete a vehicle parking action; and in response to the determination result indicating that any one of the multiple components is abnormal, executing a parking redundancy response.

In an optional embodiment, the CAN communication network further includes a power CAN.

In an optional embodiment, in a case that the automatic driving main controller fails, the parking redundancy response includes: sending, by the automatic driving auxiliary controller, a second safe parking request to the main brake controller, where the second safe parking request includes a parking instruction that is sent by the automatic driving auxiliary controller sequentially by means of the intelligent driving main CAN, the gateway, and the chassis main CAN; sending, by the main brake controller, the electronic parking request to the electronic parking controller based on the second safe parking request, and sending, by the main brake controller, the P-gear request to the P-gear controller, to cause the automatic driving system to complete the vehicle parking action; and sending, by the main brake controller, the P-gear request to the P-gear controller sequentially by means of the chassis main CAN, the gateway, and the power CAN, and simultaneously sending, by the main brake controller, the P-gear request to the P-gear controller by means of the chassis backup CAN.

In an optional embodiment, in a case that the automatic driving auxiliary controller fails, the parking redundancy response includes: sending, by the automatic driving main controller, a third safe parking request to the main brake controller, where the third safe parking request includes a parking instruction that is sent by the automatic driving main controller sequentially by means of the intelligent driving main CAN, the gateway, and the chassis main CAN, and a parking instruction that is sent by the automatic driving main controller by means of the chassis backup CAN; sending, by the main brake controller, the electronic parking request to the electronic parking controller based on the third safe parking request, and sending, by the main brake controller, the P-gear request to the P-gear controller, to cause the automatic driving system to complete the vehicle parking action; and sending, by the main brake controller, the P-gear request to the P-gear controller sequentially by means of the chassis main CAN, the gateway, and the power CAN, and simultaneously sending, by the main brake controller, the P-gear request to the P-gear controller by means of the chassis backup CAN.

In an optional embodiment, in a case that the gateway fails, the parking redundancy response includes: sending, by the automatic driving main controller, a fourth safe parking request to the main brake controller, where the fourth safe parking request includes a parking instruction that is sent by the automatic driving main controller by means of the chassis backup CAN; sending, by the main brake controller, the electronic parking request to the electronic parking controller based on the fourth safe parking request, and sending, by the main brake controller, the P-gear request to the P-gear controller, to cause the automatic driving system to complete the vehicle parking action; and sending, by the main brake controller, the P-gear request to the P-gear controller by means of the chassis backup CAN.

In an optional embodiment, in a case that the intelligent driving main CAN fails, the parking redundancy response includes: sending, by the automatic driving main controller, a fifth safe parking request to the main brake controller, where the fifth safe parking request includes a parking instruction that is sent by the automatic driving main controller by means of the chassis backup CAN; sending, by the main brake controller, the electronic parking request to the electronic parking controller based on the fifth safe parking request, and sending, by the main brake controller, the P-gear request to the P-gear controller, to cause the automatic driving system to complete the vehicle parking action; and sending, by the main brake controller, the P-gear request to the P-gear controller sequentially by means of the chassis main CAN, the gateway, and the power CAN, and simultaneously sending, by the main brake controller, the P-gear request to the P-gear controller by means of the chassis backup CAN.

In an optional embodiment, in a case that the main brake controller fails, the parking redundancy response includes: simultaneously sending, by the automatic driving main controller and the automatic driving auxiliary controller, a sixth safe parking request to the backup brake controller, where the sixth safe parking request includes a parking instruction that is sent by the automatic driving main controller and the automatic driving auxiliary controller by means of the intelligent driving main CAN, the gateway, and the chassis main CAN sequentially, and a parking instruction that is sent by the automatic driving main controller by means of the chassis backup CAN; sending, by the backup brake controller, the electronic parking request to the electronic parking controller based on the sixth safe parking request, and sending, by the backup brake controller, the P-gear request to the P-gear controller, to cause the automatic driving system to complete the vehicle parking action; and sending, by the backup brake controller, the electronic parking request to the electronic parking controller by means of the chassis main CAN and the chassis backup CAN, sending, by the backup brake controller, the P-gear request to the P-gear controller sequentially by means of the chassis main CAN, the gateway, and the power CAN, and simultaneously sending, by the backup brake controller, the P-gear request to the P-gear controller by means of the chassis backup CAN.

In an optional embodiment, in a case that the backup brake controller fails, the parking redundancy response includes: simultaneously sending, by the automatic driving main controller and the automatic driving auxiliary controller, a seventh safe parking request to the main brake controller, where the seventh safe parking request includes a parking instruction that is sent by the automatic driving main controller and the automatic driving auxiliary controller by means of the intelligent driving main CAN, the gateway, and the chassis main CAN sequentially, and a parking instruction that is sent by the automatic driving main controller by means of the chassis backup CAN; sending, by the main brake controller, the electronic parking request to the electronic parking controller based on the seventh safe parking request, and sending, by the main brake controller, the P-gear request to the P-gear controller, to cause the automatic driving system to complete the vehicle parking action; and sending, by the main brake controller, the P-gear request to the P-gear controller sequentially by means of the chassis main CAN, the gateway, and the power CAN, and simultaneously sending, by the main brake controller, the P-gear request to the P-gear controller by means of the chassis backup CAN.

In an optional embodiment, in a case that the electronic parking controller fails, the parking redundancy response includes: simultaneously sending, by the automatic driving main controller and the automatic driving auxiliary controller, an eighth safe parking request to the main brake controller, where the eighth safe parking request includes a parking instruction that is sent by the automatic driving main controller and the automatic driving auxiliary controller by means of the intelligent driving main CAN, the gateway, and the chassis main CAN sequentially, and a parking instruction that is sent by the automatic driving main controller by means of the chassis backup CAN; sending, by the main brake controller, the P-gear request to the P-gear controller based on the eighth safe parking request, to cause the automatic driving system to complete the vehicle parking action; and sending, by the main brake controller, the P-gear request to the P-gear controller sequentially by means of the chassis main CAN, the gateway, and the power CAN, and simultaneously sending, by the main brake controller, the P-gear request to the P-gear controller by means of the chassis backup CAN.

In an optional embodiment, in a case that the P-gear controller fails, the parking redundancy response includes: simultaneously sending, by the automatic driving main controller and the automatic driving auxiliary controller, a ninth safe parking request to the main brake controller, where the ninth safe parking request includes a parking instruction that is sent by the automatic driving main controller and the automatic driving auxiliary controller sequentially by means of the intelligent driving main CAN, the gateway, and the chassis main CAN, and a parking instruction that is sent by the automatic driving main controller by means of the chassis backup CAN; and sending, by the main brake controller, the electronic parking request to the electronic parking controller based on the ninth safe parking request, to cause the automatic driving system to complete the vehicle parking action.

In an optional embodiment, in a case that the power CAN fails, the parking redundancy response includes: simultaneously sending, by the automatic driving main controller and the automatic driving auxiliary controller, a tenth safe parking request to the main brake controller, where the tenth safe parking request includes a parking instruction that is sent by the automatic driving main controller and the automatic driving auxiliary controller sequentially by means of the intelligent driving main CAN, the gateway, and the chassis main CAN, and a parking instruction that is sent by the automatic driving main controller by means of the chassis backup CAN; sending, by the main brake controller, the electronic parking request to the electronic parking controller based on the tenth safe parking request, and sending, by the main brake controller, the P-gear request to the P-gear controller, to cause the automatic driving system to complete the vehicle parking action; and sending, by the main brake controller, the P-gear request to the P-gear controller by means of the chassis backup CAN.

In an optional embodiment, in a case that the chassis main CAN fails, the parking redundancy response includes: sending, by the automatic driving main controller, an eleventh safe parking request to the main brake controller, where the eleventh safe parking request includes a parking instruction that is sent by the automatic driving main controller by means of the chassis backup CAN; sending, by the main brake controller, the electronic parking request to the electronic parking controller based on the eleventh safe parking request, and sending, by the main brake controller, the P-gear request to the P-gear controller, to cause the automatic driving system to complete the vehicle parking action; and sending, by the main brake controller, the P-gear request to the P-gear controller by means of the chassis backup CAN.

In an optional embodiment, in a case that the chassis backup CAN fails, the parking redundancy response includes: simultaneously sending, by the automatic driving main controller and the automatic driving auxiliary controller, a twelfth safe parking request to the main brake controller, where the twelfth safe parking request includes a parking instruction that is sent by the automatic driving main controller and the automatic driving auxiliary controller sequentially by means of the intelligent driving main CAN, the gateway, and the chassis main CAN; sending, by the main brake controller, the electronic parking request to the electronic parking controller based on the twelfth safe parking request, and sending, by the main brake controller, the P-gear request to the P-gear controller, to cause the automatic driving system to complete the vehicle parking action; and sending, by the main brake controller, the P-gear request to the P-gear controller sequentially by means of the chassis main CAN, the gateway, and the power CAN.

Another embodiment of present invention further provides an automatic driving system. The automatic driving system is configured to execute the parking redundancy control method described in any of the above embodiments.

Another embodiment of present invention further provides a driving device. The driving device includes an automatic driving system. The automatic driving system is configured to execute the parking redundancy control method described in any of the above embodiments.

### Brief Description of the Drawings

Fig. 1 is a flowchart of a parking redundancy control method according to an embodiment of present invention.
Fig. 2 is a structural schematic diagram of an automatic driving system according to an embodiment of present invention.
Fig. 3 is a structural schematic diagram of hardware connection of an electronic parking controller according to an embodiment of present invention.
Fig. 4 is a structural schematic diagram of hardware connection of a P-gear controller according to an embodiment of present invention.
Fig. 5 is a parking flowchart of an automatic driving system in a normal state of an entire system according to an embodiment of present invention.
Fig. 6 is a parking flowchart of another automatic driving system in a normal state of an entire system according to an embodiment of present invention.
Fig. 7 is a schematic diagram of an automatic driving system according to an embodiment of present invention.
Fig. 8 is a schematic diagram of a driving device according to an embodiment of present invention.

### Detailed Description

The present invention is further described in detail below with reference to the accompanying drawings and embodiments. It is to be understood that, the specific embodiments described here are merely used for explaining present invention rather than limiting present invention. For ease of description, the parts related to present invention are shown in the drawings, but not all of the structure.

Terms "first", "second", and the like in the description, claims and the drawings of present invention are used for distinguishing different objects rather than limiting a specific sequence. The following multiple embodiments of present invention may be executed independently. The plurality of embodiments may also be executed in combination with each other, which are not specifically limited in the embodiments of present invention.

In an application scenario of a high-speed automatic driving system, high-speed automatic driving systems above L3 require sufficient time for a driver to take over after a single point of failure occurs. Before the single point of failure occurs until the driver takes over, it is required to guarantee a safe state of a vehicle. This requires the automatic driving vehicle to achieve safety redundancy, including redundancy control of parking.

In the present invention, under a state that an L3 automatic driving system is started, the monitoring, verification, and control of a redundant parking system in the automatic driving system are achieved by using main CAN network data and backup CAN network data of the vehicle. The main CAN network data includes a vehicle parking signal (Secure Request) requested by an upper layer system, a vehicle speed, a wheel speed pulse, brake master cylinder pressure, driving side seat belt status information (Seat Belt Status_Driver), cockpit door status information (Door Status_Driver), a throttle pedal aperture (Throttle Pedal Position), gear status information, Electrical Park Brake Status (EPB Status), and the like. The backup CAN network data includes the vehicle speed, the wheel speed pulse, the brake master cylinder pressure, the driving side seat belt status information (Seat Belt Status_Driver), the cockpit door status information (Door Status_Driver), the throttle pedal aperture (Throttle Pedal Position), the gear status information, the Electrical Park Brake Status (EPB Status), and the like.

Therefore, In the present invention, the safe parking of the vehicle may be achieved without extra adding hardware structures. Control logic of present invention is described in detail below.

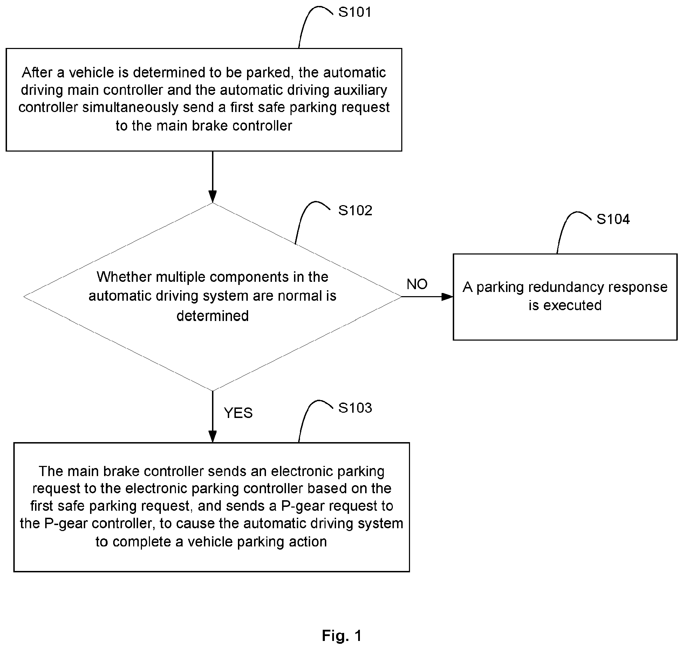

Fig. 1 is a flowchart of a parking redundancy control method according to an embodiment of present invention.

As shown in Fig. 1, the parking redundancy control method includes the following steps.

At step S101, after a vehicle is determined to be parked, the automatic driving main controller and the automatic driving auxiliary controller simultaneously send a first safe parking request to the main brake controller. The first safe parking request includes a parking instruction that is sent by the automatic driving main controller and the automatic driving auxiliary controller by means of the intelligent driving main CAN, the gateway, and the chassis main CAN sequentially, and a parking instruction that is sent by the automatic driving main controller by means of the chassis backup CAN.

In an optional embodiment, in a state of an entire system, that is, in a case that the performance of the automatic driving system is normal, the automatic driving main controller determines whether the vehicle is currently required to be parked (that is, to-be-parked) to obtain a determination result. In a case that the determination result indicates that the vehicle is required to be parked, in response to a current vehicle speed being less than a parking limit speed, the automatic driving main controller and the automatic driving auxiliary controller simultaneously send a request (Secure Request), that is, the first safe parking request, to activate a safe parking function (secure function). In order to prevent the failure of at least one of the automatic driving main controller, the automatic driving auxiliary controller, the intelligent driving main CAN, the gateway, and the chassis main CAN from causing the re-sending of a parking request to be untimely, the automatic driving main controller and the automatic driving auxiliary controller send the parking instruction to the main brake controller by means of the intelligent driving main CAN - the gateway - the chassis main CAN, and simultaneously, the automatic driving main controller sends the parking instruction to the main brake controller by means of the chassis backup CAN.

Simultaneously, the automatic driving main controller and the automatic driving auxiliary controller further send the parking instruction to the backup brake controller by means of the intelligent driving main CAN - the gateway - the chassis main CAN, and the automatic driving main controller sends the parking instruction to the backup brake controller by means of the chassis backup CAN. However, in a case that the main brake controller is in a normal state, the main brake controller preferentially executes the parking instruction (that is, the first safe parking request), and the backup brake controller is configured as a backup selection in a case that the main brake controller fails. In addition, the main brake controller preferentially responds to the first safe parking request of the automatic driving main controller from the intelligent driving main CAN to the chassis main CAN via the gateway and finally to the main brake controller.

At step S102, whether multiple components in the automatic driving system are normal is determined. The multiple components in the automatic driving system include the automatic driving main controller, the automatic driving auxiliary controller, the main brake controller, the backup brake controller, an electronic parking controller, a P-gear controller, the gateway, and a CAN communication network. The CAN communication network includes the intelligent driving main CAN, the chassis main CAN, the chassis backup CAN, and a power CAN.

In an optional embodiment, after receiving a signal of the first safe parking request, the main brake controller preferentially determines whether the current electronic parking controller and an execution mechanism, and the P-gear controller and the execution mechanism are normal, and step S103 is performed in a case that the determination result is normal.

At step S103, in response to the determination result being positive (that is, the multiple components in the automatic driving system are normal), the main brake controller sends an electronic parking request to the electronic parking controller based on the first safe parking request, and sends a P-gear request to the P-gear controller, to cause the automatic driving system to complete a vehicle parking action.

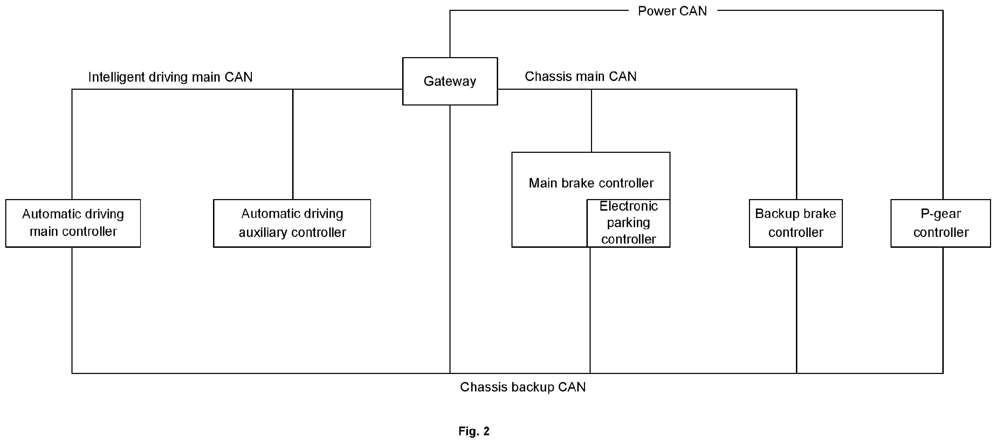

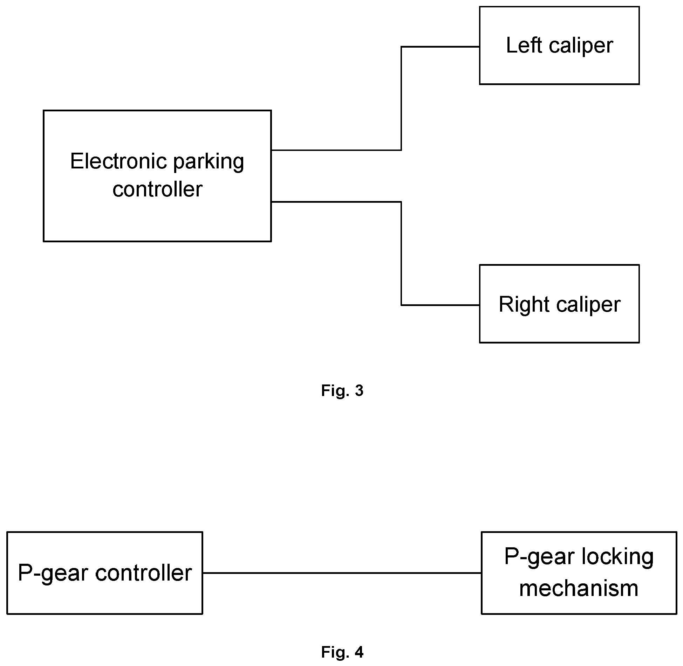

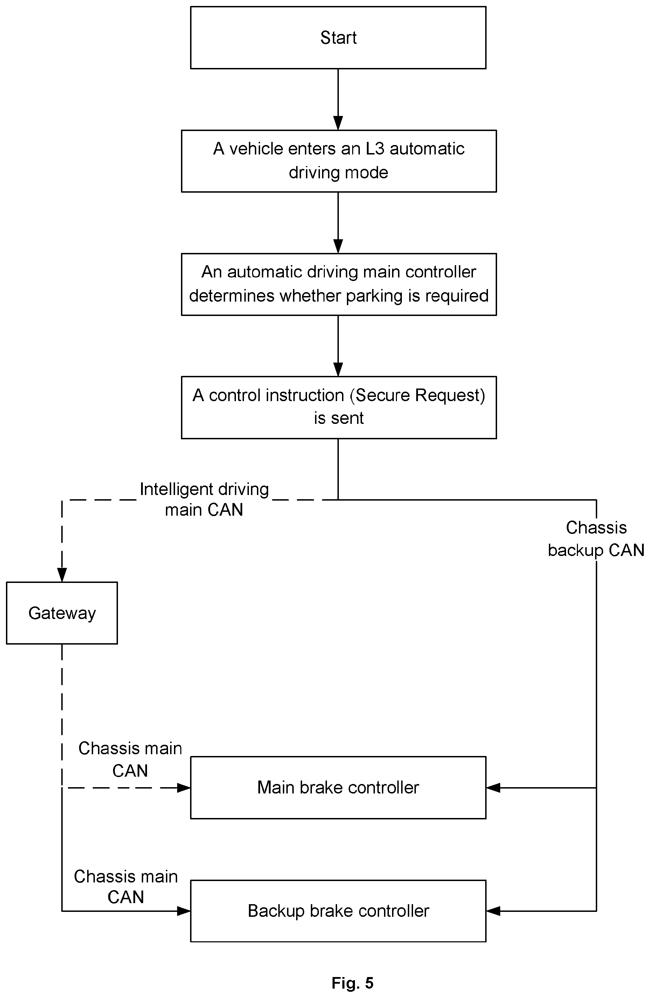

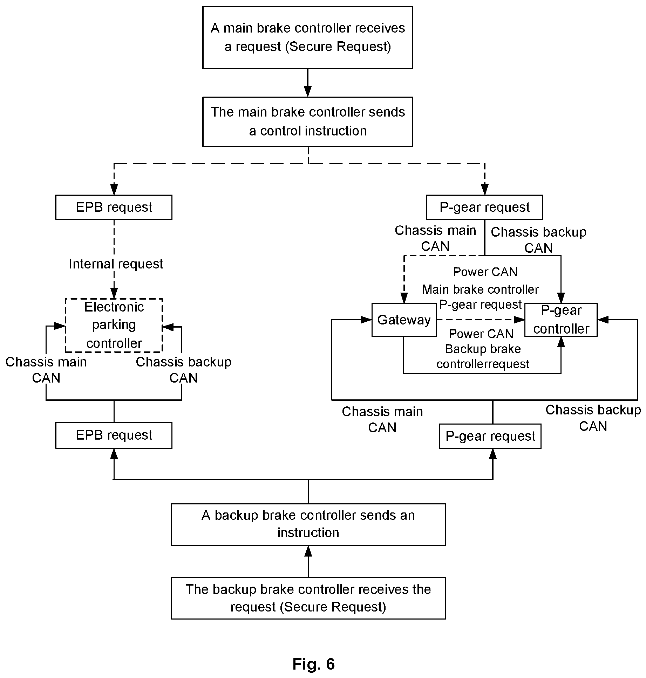

Fig. 2 is a structural schematic diagram of an automatic driving system according to an embodiment of present invention. Fig. 3 is a structural schematic diagram of hardware connection of an electronic parking controller according to an embodiment of present invention. Fig. 4 is a structural schematic diagram of hardware connection of a P-gear controller according to an embodiment of present invention. Fig. 5 is a parking flowchart of an automatic driving system in a normal state of an entire system according to an embodiment of present invention. Fig. 6 is a parking flowchart of another automatic driving system in a normal state of an entire system according to an embodiment of present invention. EPB shown in Fig. 6 is an electronic parking brake system.

In an optional embodiment, as shown in Fig. 2, Fig. 5, and Fig. 6, the electronic parking controller is integrated in the main brake controller. In a case that the determination result indicates that the multiple components are normal, the main brake controller sends the electronic parking request to the electronic parking controller by means of an internal signal. In addition, the main brake controller further sends the P-gear request to the P-gear controller by means of the chassis main CAN via the gateway and the power CAN, and sends the P-gear request to the P-gear controller by means of the chassis backup CAN, requesting to pull up a P gear.

As shown in Fig. 3 and Fig. 4, the electronic parking controller is connected with a caliper. The caliper includes a left caliper and a right caliper. After the electronic parking controller receives the electronic parking request, the caliper is controlled to clamp. The P-gear controller is connected with a P-gear locking mechanism. After the P-gear controller receives the P-gear request, the P-gear locking mechanism is controlled to pull up, so that a parking action of the vehicle is completed. After the parking action is completed, the electronic parking controller and the P-gear controller feedback the corresponding EPB status and gear status information to the automatic driving main controller. After determining that parking is completed, the automatic driving main controller exits from automatic driving.

In this embodiment of present invention, the electronic parking controller preferentially responds to the electronic parking request sent by the main brake controller. The P-gear controller preferentially responds to the P-gear request that is sent to the P-gear controller by the main brake controller through the chassis main CAN via the gateway and the power CAN. In an optional embodiment, the electronic parking controller may alternatively be integrated in the backup brake controller. Alternatively, the electronic parking controller may simultaneously be integrated in the main brake controller and the backup brake controller. Alternatively, the electronic parking controller may be an independent controller, which may be selected according to actual requirements, and is not described herein again. In the present invention, the electronic parking controller being integrated in the main brake controller is taken as an example for description.

At step S104, in response to the determination result being negative (that is, not all of the multiple components in the automatic driving system are normal, and at least one of the multiple components is abnormal), a parking redundancy response is executed.

In an optional embodiment, in response to the determination result being negative, it indicates that there are faults in at least one component in the automatic driving system. Then, the automatic driving system further executes parking redundancy response. The parking redundancy response means that the way that the automatic driving system causes a vehicle to be safely parked before a driver takes over after there are faults in at least one component in the automatic driving system.

An embodiment of the present invention discloses a parking redundancy control method. The parking redundancy control method includes the following steps. The automatic driving main controller and the automatic driving auxiliary controller simultaneously send the first safe parking request to the main brake controller. It is determined whether the multiple components in the automatic driving system are normal. In response to the determination result indicating that the plurality of components are normal, the main brake controller sends the electronic parking request to the electronic parking controller based on the first safe parking request, and sends the P-gear request to the P-gear controller, to cause the automatic driving system to complete the vehicle parking action. In response to the determination result indicating that at least one of the multiple components is abnormal, the parking redundancy response is executed. In the present invention, the technical effect that, without extra adding hardware mechanisms, the vehicle can be safely parked in a case that the vehicle is in an automatic driving and travel state and before the driver takes over the vehicle can be achieved.

Optionally, in a case that the automatic driving main controller fails, the parking redundancy response includes the following steps.

At step S201, the automatic driving auxiliary controller sends a second safe parking request to the main brake controller. The second safe parking request includes a parking instruction that is sent by the automatic driving auxiliary controller sequentially by means of the intelligent driving main CAN, the gateway, and the chassis main CAN.

In an optional embodiment, after the automatic driving main controller fails, the automatic driving auxiliary controller determines whether the vehicle is currently required to be parked. In a case that the determination result indicates positive, in response to a current vehicle speed being less than a parking limit speed, the automatic driving auxiliary controller sends a request, that is, the second safe parking request, to the main brake controller, so as to activate a safe parking function. As shown in Fig. 2, Fig. 5, and Fig. 6, the second safe parking request is sent to the main brake controller by means of the intelligent driving main CAN, the gateway, and the chassis main CAN. In addition, the second safe parking request is further sent to the backup brake controller by means of the intelligent driving main CAN, the gateway, and the chassis main CAN. However, in a case that the main brake controller is in the normal state, the main brake controller preferentially executes the parking instruction (that is, the second safe parking request), and the backup brake controller is configured as the backup selection in a case that the main brake controller fails.

At step S202, the main brake controller sends the electronic parking request to the electronic parking controller based on the second safe parking request, and sends the P-gear request to the P-gear controller, to cause the automatic driving system to complete the vehicle parking action. The main brake controller sends the P-gear request to the P-gear controller sequentially by means of the chassis main CAN, the gateway, and the power CAN, and simultaneously sends the P-gear request to the P-gear controller by means of the chassis backup CAN.

In an optional embodiment, after receiving a signal of the second safe parking request, the main brake controller determines whether the current electronic parking controller and an execution mechanism, and the P-gear controller and the execution mechanism are normal. In a case that the determination result is normal, the main brake controller sends the electronic parking request to the electronic parking controller by means of an internal signal. In addition, the main brake controller further sends the P-gear request to the P-gear controller by means of the chassis main CAN via the gateway and the power CAN, and sends the P-gear request to the P-gear controller by means of the chassis backup CAN, requesting to pull up a P gear. After the electronic parking controller receives the electronic parking request, the caliper is controlled to clamp. After the P-gear controller receives the P-gear request, a P-gear locking mechanism is controlled to pull up, so that a parking action of the vehicle is completed. After the parking action is completed, the electronic parking controller and the P-gear controller feedback the corresponding EPB status and gear status information to the automatic driving auxiliary controller. After determining that parking is completed, the automatic driving auxiliary controller exits from automatic driving.

Optionally, in a case that the automatic driving auxiliary controller fails, the parking redundancy response includes the following steps.

At step S301, the automatic driving main controller sends a third safe parking request to the main brake controller. The third safe parking request includes a parking instruction that is sent by the automatic driving main controller sequentially by means of the intelligent driving main CAN, the gateway, and the chassis main CAN, and a parking instruction that is sent by the automatic driving main controller by means of the chassis backup CAN.

In an optional embodiment, after the automatic driving auxiliary controller fails, the automatic driving main controller determines whether the vehicle is currently required to be parked. In a case that the determination result indicates positive, in response to a current vehicle speed being less than a parking limit speed, the automatic driving main controller sends a request, that is, the third safe parking request, to the main brake controller, so as to activate the safe parking function. As shown in Fig. 2, Fig. 5, and Fig. 6, the third safe parking request can not only be sent to the main brake controller by means of the intelligent driving main CAN, the gateway, and the chassis main CAN, but also be sent to the main brake controller by means of the chassis backup CAN. In addition, the third safe parking request is further sent to the backup brake controller by means of the intelligent driving main CAN, the gateway, and the chassis main CAN, and is sent to the backup brake controller by means of the chassis backup CAN. However, in a case that the main brake controller is in the normal state, the main brake controller preferentially executes the parking instruction (that is, the third safe parking request), and the backup brake controller is configured as the backup selection in a case that the main brake controller fails.

At step S302, the main brake controller sends the electronic parking request to the electronic parking controller based on the third safe parking request, and sends the P-gear request to the P-gear controller, to cause the automatic driving system to complete the vehicle parking action. The main brake controller sends the P-gear request to the P-gear controller sequentially by means of the chassis main CAN, the gateway, and the power CAN, and simultaneously sends the P-gear request to the P-gear controller by means of the chassis backup CAN.

In an optional embodiment, after receiving a signal of the third safe parking request, the main brake controller determines whether the current electronic parking controller and an execution mechanism, and the P-gear controller and the execution mechanism are normal. In a case that the determination result is normal, the main brake controller sends the electronic parking request to the electronic parking controller by means of an internal signal. In addition, the main brake controller further sends the P-gear request to the P-gear controller by means of the chassis main CAN via the gateway and the power CAN, and sends the P-gear request to the P-gear controller by means of the chassis backup CAN, requesting to pull up a P gear. After the electronic parking controller receives the electronic parking request, the caliper is controlled to clamp. After the P-gear controller receives the P-gear request, a P-gear locking mechanism is controlled to pull up, so that a parking action of the vehicle is completed. After the parking action is completed, the electronic parking controller and the P-gear controller feedback the corresponding EPB status and gear status information to the automatic driving main controller. After determining that parking is completed, the automatic driving main controller exits from automatic driving.

Optionally, in a case that the gateway fails, the parking redundancy response includes the following steps. At step S401, the automatic driving main controller sends a fourth safe parking request to the main brake controller. The fourth safe parking request includes a parking instruction that is sent by the automatic driving main controller by means of the chassis backup CAN.

In an optional embodiment, after the gateway fails, the automatic driving main controller determines whether the vehicle is currently required to be parked. In a case that the determination result indicates positive, in response to a current vehicle speed being less than a parking limit speed, the automatic driving main controller sends a request, that is, the fourth safe parking request, to the main brake controller, so as to activate the safe parking function. As shown in Fig. 2, Fig. 5, and Fig. 6, the fourth safe parking request is sent to the main brake controller by means of the chassis backup CAN. In addition, the automatic driving main controller further sends the fourth safe parking request to the backup brake controller by means of the chassis backup CAN. However, in a case that the main brake controller is in the normal state, the main brake controller preferentially executes the received parking instruction (that is, the fourth safe parking request), and the backup brake controller is configured as the backup selection in a case that the main brake controller fails. In addition, the main brake controller preferentially executes the parking instruction sent by the automatic driving main controller.

At step S402, the main brake controller sends the electronic parking request to the electronic parking controller based on the fourth safe parking request, and sends the P-gear request to the P-gear controller, to cause the automatic driving system to complete the vehicle parking action. The main brake controller sends the P-gear request to the P-gear controller by means of the chassis backup CAN.

In an optional embodiment, after receiving a signal of the fourth safe parking request, the main brake controller determines whether the current electronic parking controller and the execution mechanism, and the P-gear controller and the execution mechanism are normal. In a case that the determination result is normal, the main brake controller sends the electronic parking request to the electronic parking controller by means of the internal signal. In addition, the main brake controller further sends the P-gear request to the P-gear controller by means of the chassis backup CAN, requesting to pull up a P gear. After the electronic parking controller receives the electronic parking request, the caliper is controlled to clamp. After the P-gear controller receives the P-gear request, a P-gear locking mechanism is controlled to pull up, so that a parking action of the vehicle is completed. After the parking action is completed, the electronic parking controller and the P-gear controller feedback the corresponding EPB status and gear status information to the automatic driving main controller. After determining that parking is completed, the automatic driving main controller exits from automatic driving.

Optionally, in a case that the intelligent driving main CAN fails, the parking redundancy response includes the following steps. At step S501, the automatic driving main controller sends a fifth safe parking request to the main brake controller. The fifth safe parking request includes a parking instruction that is sent by the automatic driving main controller by means of the chassis backup CAN.

In an optional embodiment, after the intelligent driving main CAN fails, the automatic driving main controller determines whether the vehicle is currently required to be parked. In a case that the determination result indicates positive, in response to a current vehicle speed being less than a parking limit speed, the automatic driving main controller sends a request, that is, the fifth safe parking request, to the main brake controller, so as to activate the safe parking function. As shown in Fig. 2, Fig. 5, and Fig. 6, the fifth safe parking request is sent to the main brake controller by means of the chassis backup CAN. In addition, the automatic driving main controller further sends the fifth safe parking request to the backup brake controller by means of the chassis backup CAN. However, in a case that the main brake controller is in the normal state, the main brake controller preferentially executes the received parking instruction (that is, the fifth safe parking request), and the backup brake controller is configured as the backup selection in a case that the main brake controller fails. In addition, the main brake controller preferentially executes the parking instruction sent by the automatic driving main controller.

At step S502, the main brake controller sends the electronic parking request to the electronic parking controller based on the fifth safe parking request, and sends the P-gear request to the P-gear controller, to cause the automatic driving system to complete the vehicle parking action. As shown in Fig. 2, Fig. 5, and Fig. 6, the main brake controller sends the P-gear request to the P-gear controller sequentially by means of the chassis main CAN, the gateway, and the power CAN, and simultaneously sends the P-gear request to the P-gear controller by means of the chassis backup CAN.

In an optional embodiment, after receiving a signal of the fifth safe parking request, the main brake controller determines whether the current electronic parking controller and an execution mechanism, and the P-gear controller and the execution mechanism are normal. In a case that the determination result is normal, the main brake controller sends the electronic parking request to the electronic parking controller by means of an internal signal. In addition, the main brake controller further sends the P-gear request to the P-gear controller by means of the chassis main CAN via the gateway and the power CAN, and sends the P-gear request to the P-gear controller by means of the chassis backup CAN, requesting to pull up a P gear. After the electronic parking controller receives the electronic parking request, the caliper is controlled to clamp. After the P-gear controller receives the P-gear request, a P-gear locking mechanism is controlled to pull up, so that a parking action of the vehicle is completed. After the parking action is completed, the electronic parking controller and the P-gear controller feedback the corresponding EPB status and gear status information to the automatic driving main controller. After determining that parking is completed, the automatic driving main controller exits from automatic driving.

Optionally, in a case that the main brake controller fails, the parking redundancy response includes the following steps.

At step S601, the automatic driving main controller and the automatic driving auxiliary controller simultaneously send a sixth safe parking request to the backup brake controller. The sixth safe parking request includes a parking instruction that is sent by the automatic driving main controller and the automatic driving auxiliary controller by means of the intelligent driving main CAN, the gateway, and the chassis main CAN sequentially, and a parking instruction that is sent by the automatic driving main controller by means of the chassis backup CAN.

In an optional embodiment, after the main brake controller fails, the automatic driving main controller determines whether the vehicle is currently required to be parked. In a case that the determination result indicates positive, in response to a current vehicle speed being less than a parking limit speed, the automatic driving main controller sends a request, that is, the sixth safe parking request, to the backup brake controller, so as to activate the safe parking function. As shown in Fig. 2, Fig. 5, and Fig. 6, the sixth safe parking request includes a parking instruction that is sent to the backup brake controller by the automatic driving main controller and the automatic driving auxiliary controller by means of the intelligent driving main CAN, the gateway, and the chassis main CAN sequentially, and a parking instruction that is sent to the backup brake controller by the automatic driving main controller by means of the chassis backup CAN. The backup brake controller preferentially responds to the parking instruction that is sent by the automatic driving main controller by means of the intelligent driving main CAN, the gateway, and the chassis main CAN. The automatic driving auxiliary controller is configured as a backup selection in a case that the automatic driving main controller fails.

At step S602, the backup brake controller sends the electronic parking request to the electronic parking controller based on the sixth safe parking request, and sends the P-gear request to the P-gear controller, to cause the automatic driving system to complete the vehicle parking action. As shown in Fig. 2, Fig. 5, and Fig. 6, the backup brake controller sends the electronic parking request to the electronic parking controller respectively by means of the chassis main CAN and the chassis backup CAN. The backup brake controller sends the P-gear request to the P-gear controller sequentially by means of the chassis main CAN, the gateway, and the power CAN, and simultaneously sends the P-gear request to the P-gear controller by means of the chassis backup CAN.

In an optional embodiment, after receiving a signal of the sixth safe parking request, the backup brake controller determines whether the current electronic parking controller and the execution mechanism, and the P-gear controller and the execution mechanism are normal. In a case that the determination result is normal, the backup brake controller sends the electronic parking request to the electronic parking controller respectively by means of the chassis main CAN and the chassis backup CAN. In addition, the backup brake controller further sends the P-gear request to the P-gear controller by means of the chassis main CAN via the gateway and the power CAN, and sends the P-gear request to the P-gear controller by means of the chassis backup CAN, requesting to pull up a P gear. After the electronic parking controller receives the electronic parking request, the caliper is controlled to clamp. After the P-gear controller receives the P-gear request, a P-gear locking mechanism is controlled to pull up, so that a parking action of the vehicle is completed. After the parking action is completed, the electronic parking controller and the P-gear controller feedback the corresponding EPB status and gear status information to the automatic driving main controller. After determining that parking is completed, the automatic driving main controller exits from automatic driving.

In an optional embodiment, the electronic parking controller preferentially responds to the electronic parking request sent by the backup brake controller by means of the chassis backup CAN, and the electronic parking request sent by the backup brake controller by means of the chassis backup CAN is configured as a backup selection in a case that the chassis main CAN fails. The P-gear controller preferentially responds to the P-gear request that is sent to the P-gear controller by the backup brake controller by means of the chassis main CAN via the gateway and the power CAN, and the P-gear request sent by the backup brake controller by means of the chassis backup CAN is configured as a backup selection in a case that at least one of the chassis main CAN, the gateway, and the power CAN fail.

Optionally, in a case that the backup brake controller fails, the parking redundancy response includes the following steps.

At step S701, the automatic driving main controller and the automatic driving auxiliary controller simultaneously send a seventh safe parking request to the main brake controller. The seventh safe parking request includes a parking instruction that is sent by the automatic driving main controller and the automatic driving auxiliary controller by means of the intelligent driving main CAN, the gateway, and the chassis main CAN sequentially, and a parking instruction that is sent by the automatic driving main controller by means of the chassis backup CAN.

In an optional embodiment, after the backup brake controller fails, the automatic driving main controller determines whether the vehicle is currently required to be parked. In a case that the determination result indicates positive, in response to a current vehicle speed being less than the parking limit speed, the automatic driving main controller and the automatic driving auxiliary controller send a request, that is, the seventh safe parking request, to the main brake controller, so as to activate the safe parking function. As shown in Fig. 2, Fig. 5, and Fig. 6, the seventh safe parking request can not only be sent to the main brake controller by the automatic driving main controller and the automatic driving auxiliary controller by means of the intelligent driving main CAN, the gateway, and the chassis main CAN, but also be sent to the main brake controller by the automatic driving main controller by means of the chassis backup CAN. The main brake controller preferentially responds to the parking instruction that is sent by the automatic driving main controller by means of the intelligent driving main CAN, the gateway, and the chassis main CAN.

At step S702, the main brake controller sends the electronic parking request to the electronic parking controller based on the seventh safe parking request, and sends the P-gear request to the P-gear controller, to cause the automatic driving system to complete the vehicle parking action. The main brake controller sends the P-gear request to the P-gear controller sequentially by means of the chassis main CAN, the gateway, and the power CAN, and simultaneously sends the P-gear request to the P-gear controller by means of the chassis backup CAN.

In an optional embodiment, after receiving a signal of the seventh safe parking request, the main brake controller determines whether the current electronic parking controller and an execution mechanism, and the P-gear controller and the execution mechanism are normal. In a case that the determination result is normal, the main brake controller sends the electronic parking request to the electronic parking controller by means of an internal signal. In addition, the main brake controller further sends the P-gear request to the P-gear controller by means of the chassis main CAN via the gateway and the power CAN, and sends the P-gear request to the P-gear controller by means of the chassis backup CAN, requesting to pull up a P gear. After the electronic parking controller receives the electronic parking request, the caliper is controlled to clamp. After the P-gear controller receives the P-gear request, a P-gear locking mechanism is controlled to pull up, so that a parking action of the vehicle is completed. After the parking action is completed, the electronic parking controller and the P-gear controller feedback the corresponding EPB status and gear status information to the automatic driving main controller. After determining that parking is completed, the automatic driving main controller exits from automatic driving.

In an optional embodiment, the P-gear controller preferentially responds to the P-gear request that is sent to the P-gear controller by the main brake controller by means of the chassis main CAN via the gateway and the power CAN, and the P-gear request sent by the main brake controller by means of the chassis backup CAN is configured as a backup selection in a case that at least one of the chassis main CAN, the gateway, and the power CAN fail.

Optionally, in a case that the electronic parking controller fails, the parking redundancy response includes the following steps.

At step S801, the automatic driving main controller and the automatic driving auxiliary controller simultaneously send an eighth safe parking request to the main brake controller. The eighth safe parking request includes a parking instruction that is sent by the automatic driving main controller and the automatic driving auxiliary controller by means of the intelligent driving main CAN, the gateway, and the chassis main CAN sequentially, and a parking instruction that is sent by the automatic driving main controller by means of the chassis backup CAN.

In an optional embodiment, after the electronic parking controller fails, the automatic driving main controller determines whether the vehicle is currently required to be parked. In a case that the determination result indicates positive, in response to a current vehicle speed being less than the parking limit speed, the automatic driving main controller and the automatic driving auxiliary controller send a request, that is, the eighth safe parking request, to the main brake controller, so as to activate the safe parking function. As shown in Fig. 2, Fig. 5, and Fig. 6, the eighth safe parking request can not only be sent to the main brake controller by the automatic driving main controller and the automatic driving auxiliary controller by means of the intelligent driving main CAN, the gateway, and the chassis main CAN, but also be sent to the main brake controller by the automatic driving main controller by means of the chassis backup CAN. The main brake controller preferentially responds to the parking instruction that is sent by the automatic driving main controller by means of the intelligent driving main CAN, the gateway, and the chassis main CAN.

In addition, the eighth safe parking request is further sent to the backup brake controller by the automatic driving main controller and the automatic driving auxiliary controller by means of the intelligent driving main CAN, the gateway, and the chassis main CAN, and is sent to the backup brake controller to the automatic driving main controller by means of the chassis backup CAN. However, in a case that the main brake controller is in the normal state, the main brake controller preferentially executes the received parking instruction (that is, the eighth safe parking request), and the backup brake controller is configured as the backup selection in a case that the main brake controller fails.

At step S802, the main brake controller sends the P-gear request to the P-gear controller based on the eighth safe parking request, to cause the automatic driving system to complete the vehicle parking action. The main brake controller sends the P-gear request to the P-gear controller sequentially by means of the chassis main CAN, the gateway, and the power CAN, and simultaneously sends the P-gear request to the P-gear controller by means of the chassis backup CAN.

In an optional embodiment, after receiving a signal of the eighth safe parking request, the main brake controller determines whether the P-gear controller and the execution mechanism are normal. In a case that the determination result is normal, the main brake controller sends the P-gear request to the P-gear controller by means of the chassis main CAN via the gateway and the power CAN, and sends the P-gear request to the P-gear controller by means of the chassis backup CAN, requesting to pull up a P gear. After the P-gear controller receives the P-gear request, the P-gear locking mechanism is controlled to pull up, so that a parking action of the vehicle is completed. After the parking action is completed, the P-gear controller feeds back the corresponding gear status information to the automatic driving main controller. After determining that parking is completed, the automatic driving main controller exits from automatic driving. In an optional embodiment, the P-gear controller preferentially responds to the P-gear request that is sent to the P-gear controller by the main brake controller by means of the chassis main CAN via the gateway and the power CAN, and the P-gear request sent by the main brake controller by means of the chassis backup CAN is configured as a backup selection in a case that at least one of the chassis main CAN, the gateway, and the power CAN fail.

Optionally, in a case that the P-gear controller fails, the parking redundancy response includes the following steps.

At step S901, the automatic driving main controller and the automatic driving auxiliary controller simultaneously send a ninth safe parking request to the main brake controller. The ninth safe parking request includes a parking instruction that is sent by the automatic driving main controller and the automatic driving auxiliary controller by means of the intelligent driving main CAN, the gateway, and the chassis main CAN sequentially, and a parking instruction that is sent by the automatic driving main controller by means of the chassis backup CAN.

In an optional embodiment, after the P-gear controller fails, the automatic driving main controller determines whether the vehicle is currently required to be parked. In a case that the determination result indicates positive, in response to a current vehicle speed being less than the parking limit speed, the automatic driving main controller and the automatic driving auxiliary controller send a request, that is, the ninth safe parking request, to the main brake controller, so as to activate the safe parking function. As shown in Fig. 2, Fig. 5, and Fig. 6, the ninth safe parking request can not only be sent to the main brake controller by the automatic driving main controller and the automatic driving auxiliary controller by means of the intelligent driving main CAN, the gateway, and the chassis main CAN, but also be sent to the main brake controller by the automatic driving main controller by means of the chassis backup CAN. The main brake controller preferentially responds to the parking instruction that is sent by the automatic driving main controller by means of the intelligent driving main CAN, the gateway, and the chassis main CAN.

In addition, the ninth safe parking request is further sent to the backup brake controller by the automatic driving main controller and the automatic driving auxiliary controller by means of the intelligent driving main CAN, the gateway, and the chassis main CAN, and is sent to the backup brake controller to the automatic driving main controller by means of the chassis backup CAN. However, in a case that the main brake controller is in the normal state, the main brake controller preferentially executes the received parking instruction (that is, the ninth safe parking request), and the backup brake controller is configured as the backup selection in a case that the main brake controller fails.

At step S902, the main brake controller sends the electronic parking request to the electronic parking controller based on the ninth safe parking request, to cause the automatic driving system to complete the vehicle parking action.

In an optional embodiment, after receiving a signal of the ninth safe parking request, the main brake controller determines whether the current electronic parking controller and the execution mechanism are normal. In a case that the determination result is normal, the main brake controller sends the electronic parking request to the electronic parking controller by means of the internal signal. After the electronic parking controller receives the electronic parking request, the caliper is controlled to clamp, so that the parking action of the vehicle is completed. After the parking action is completed, the electronic parking controller feeds back the corresponding EPB status information to the automatic driving main controller. After determining that parking is completed, the automatic driving main controller exits from automatic driving.

Optionally, in a case that the power CAN fails, the parking redundancy response includes the following steps.

At step S1001, the automatic driving main controller and the automatic driving auxiliary controller simultaneously send a tenth safe parking request to the main brake controller. The tenth safe parking request includes a parking instruction that is sent by the automatic driving main controller and the automatic driving auxiliary controller by means of the intelligent driving main CAN, the gateway, and the chassis main CAN sequentially, and a parking instruction that is sent by the automatic driving main controller by means of the chassis backup CAN.

In an optional embodiment, after the power CAN fails, the automatic driving main controller determines whether the vehicle is currently required to be parked. In a case that the determination result indicates positive, in response to a current vehicle speed being less than the parking limit speed, the automatic driving main controller and the automatic driving auxiliary controller simultaneously send a request, that is, the tenth safe parking request, to the main brake controller, so as to activate the safe parking function. As shown in Fig. 2, Fig. 5, and Fig. 6, the tenth safe parking request can not only be sent to the main brake controller by the automatic driving main controller and the automatic driving auxiliary controller by means of the intelligent driving main CAN, the gateway, and the chassis main CAN, but also be sent to the main brake controller by the automatic driving main controller by means of the chassis backup CAN. The main brake controller preferentially responds to the parking instruction that is sent by the automatic driving main controller by means of the intelligent driving main CAN, the gateway, and the chassis main CAN.

In addition, the automatic driving main controller further sends the tenth safe parking request to the backup brake controller by means of the chassis backup CAN. However, in a case that the main brake controller is in the normal state, the main brake controller preferentially executes the received parking instruction (that is, the tenth safe parking request), and the backup brake controller is configured as the backup selection in a case that the main brake controller fails.

At step S1002, the main brake controller sends the electronic parking request to the electronic parking controller based on the tenth safe parking request, and sends the P-gear request to the P-gear controller, to cause the automatic driving system to complete the vehicle parking action. As shown in Fig. 2, Fig. 5, and Fig. 6, the main brake controller sends the P-gear request to the P-gear controller by means of the chassis backup CAN.

In an optional embodiment, after receiving a signal of the tenth safe parking request, the main brake controller determines whether the current electronic parking controller and the execution mechanism, and the P-gear controller and the execution mechanism are normal. In a case that the determination result is normal, the main brake controller sends the electronic parking request to the electronic parking controller by means of the internal signal. In addition, the main brake controller further sends the P-gear request to the P-gear controller by means of the chassis backup CAN, requesting to pull up a P gear. After the electronic parking controller receives the electronic parking request, the caliper is controlled to clamp. After the P-gear controller receives the P-gear request, a P-gear locking mechanism is controlled to pull up, so that a parking action of the vehicle is completed. After the parking action is completed, the electronic parking controller and the P-gear controller feedback the corresponding EPB status and gear status information to the automatic driving main controller. After determining that parking is completed, the automatic driving main controller exits from automatic driving.

Optionally, in a case that the chassis main CAN fails, the parking redundancy response includes the following steps.

At step S1101, the automatic driving main controller sends an eleventh safe parking request to the main brake controller, and the eleventh safe parking request is a parking instruction that is sent by the automatic driving main controller by means of the chassis backup CAN.

In an optional embodiment, after the chassis main CAN fails, the automatic driving main controller determines whether the vehicle is currently required to be parked. In a case that the determination result indicates positive, in response to a current vehicle speed being less than a parking limit speed, the automatic driving main controller sends a request, that is, the eleventh safe parking request, to the main brake controller, so as to activate the safe parking function. As shown in Fig. 2, Fig. 5, and Fig. 6, the eleventh safe parking request includes the parking instruction that is sent to the main brake controller by the automatic driving main controller by means of the chassis backup CAN. In addition, the eleventh safe parking request is further sent to the backup brake controller by the automatic driving main controller by means of the chassis backup CAN. However, in a case that the main brake controller is in the normal state, the main brake controller preferentially executes the received parking instruction (that is, the eleventh safe parking request), and the backup brake controller is configured as the backup selection in a case that the main brake controller fails.

At step S1102, the main brake controller sends the electronic parking request to the electronic parking controller based on the eleventh safe parking request, and sends the P-gear request to the P-gear controller, to cause the automatic driving system to complete the vehicle parking action. The main brake controller sends the P-gear request to the P-gear controller by means of the chassis backup CAN.

In an optional embodiment, after receiving a signal of the eleventh safe parking request, the main brake controller determines whether the current electronic parking controller and the execution mechanism, or the P-gear controller and the execution mechanism are normal. In a case that the determination result is normal, the main brake controller sends the electronic parking request to the electronic parking controller by means of the internal signal. In addition, the main brake controller sends the P-gear request to the P-gear controller by means of the chassis backup CAN, requesting to pull up a P gear. After the electronic parking controller receives the electronic parking request, the caliper is controlled to clamp. After the P-gear controller receives the P-gear request, a P-gear locking mechanism is controlled to pull up, so that a parking action of the vehicle is completed. After the parking action is completed, the electronic parking controller and the P-gear controller feedback the corresponding EPB status and gear status information to the automatic driving main controller. After determining that parking is completed, the automatic driving main controller exits from automatic driving.

Optionally, in a case that the chassis backup CAN fails, the parking redundancy response includes the following steps.

At step S1201, the automatic driving main controller and the automatic driving auxiliary controller simultaneously send a twelfth safe parking request to the main brake controller, and the twelfth safe parking request includes a parking instruction that is sent by the automatic driving main controller and the automatic driving auxiliary controller sequentially by means of the intelligent driving main CAN, the gateway, and the chassis main CAN.

In an optional embodiment, after the chassis backup CAN fails, the automatic driving main controller determines whether the vehicle is currently required to be parked. In a case that the determination result indicates positive, in response to a current vehicle speed being less than the parking limit speed, the automatic driving main controller and the automatic driving auxiliary controller send a request, that is, the twelfth safe parking request, to the main brake controller, so as to activate the safe parking function. As shown in Fig. 2, Fig. 5, and Fig. 6, the twelfth safe parking request is the parking instruction that is sent to the main brake controller by the automatic driving main controller and the automatic driving auxiliary controller by means of the intelligent driving main CAN, the gateway, and the chassis main CAN.

In addition, the second safe parking request is further sent to the backup brake controller by the automatic driving main controller and the automatic driving auxiliary controller by means of the intelligent driving main CAN, the gateway, and the chassis main CAN. However, in a case that the main brake controller is in the normal state, the main brake controller preferentially executes the received parking instruction (that is, the twelfth safe parking request), and the backup brake controller is configured as the backup selection in a case that the main brake controller fails.

At step S1202, the main brake controller sends the electronic parking request to the electronic parking controller based on the twelfth safe parking request, and sends the P-gear request to the P-gear controller, to cause the automatic driving system to complete the vehicle parking action. The main brake controller sends the P-gear request to the P-gear controller sequentially by means of the chassis main CAN, the gateway, and the power CAN.

In an optional embodiment, after receiving a signal of the twelfth safe parking request, the main brake controller determines whether the current electronic parking controller and the execution mechanism, or the P-gear controller and the execution mechanism are normal. In a case that the determination result is normal, the main brake controller sends the electronic parking request to the electronic parking controller by means of the internal signal. In addition, the main brake controller sends the P-gear request to the P-gear controller by means of the chassis main CAN via the gateway and the power CAN.

After the electronic parking controller receives the electronic parking request, the caliper is controlled to clamp. After the P-gear controller receives the P-gear request, a P-gear locking mechanism is controlled to pull up, so that a parking action of the vehicle is completed. After the parking action is completed, the electronic parking controller and the P-gear controller feedback the corresponding EPB status and gear status information to the automatic driving main controller. After determining that parking is completed, the automatic driving main controller exits from automatic driving.

The parking redundancy control method provided In the present invention has the following advantages. On the basis of a current high-speed automatic driving architecture, safe parking redundancy of the automatic driving system can be achieved without extra adding any hardware mechanism. In a case that the vehicle is in an automatic driving and travel state, whether it is an entire system or a single point of failure, the safe parking of the vehicle can be guaranteed under the premise that a driver does not take over in time. In the present invention, on the basis of an original function of a first brake controller (that is, the main brake controller), functions of monitoring, verification, and control of the parking redundancy system are added, so that effective parking redundancy backup can be achieved, and the vehicle can reach a safe state. In the present invention, on the basis of an original function of a second brake controller (that is, the backup brake controller), the functions of monitoring, verification, and control of the parking redundancy system are added, so that the effective parking redundancy backup can be achieved, and the vehicle can reach the safe state.

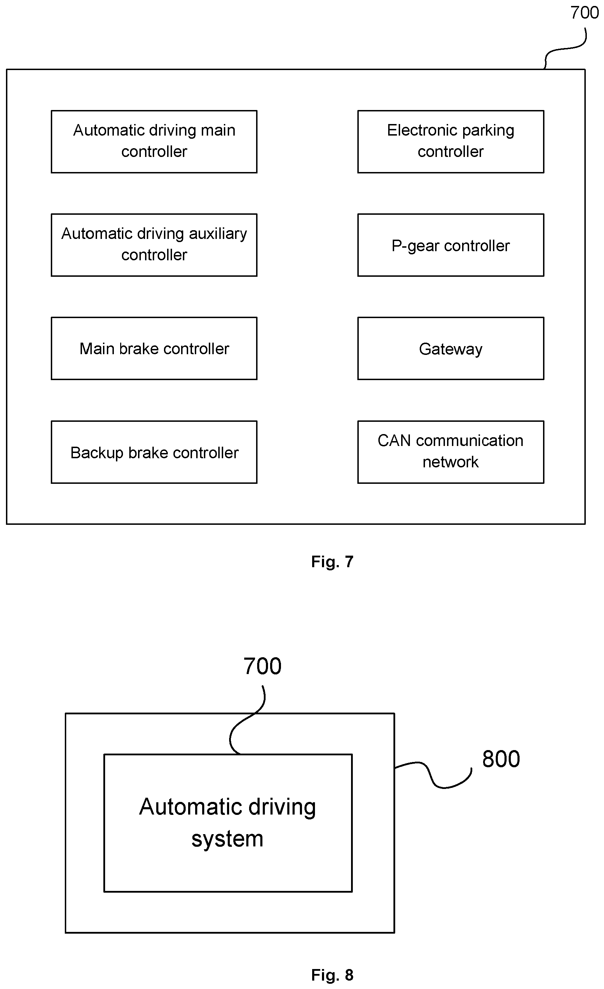

As shown in Fig. 7, an embodiment of present invention further provides an automatic driving system 700. The automatic driving system 700 is configured to execute the parking redundancy control method described in any of the above embodiments.

The automatic driving system 700 provided in this embodiment of present invention executes the parking redundancy control method in the above embodiments. Therefore, the automatic driving system 700 provided in this embodiment of present invention also has the effect described in the above embodiments, which is not described herein again.

As shown in Fig. 8, an embodiment of present invention further provides a driving device 800. The driving device 800 includes the automatic driving system 700. The automatic driving system 700 is configured to execute the method described in any of the above embodiments.

The driving device 800 provided in this embodiment of present invention includes the automatic driving system 700 in the above embodiment. Therefore, the driving device 800 provided in this embodiment of present invention further has the effect described in the above embodiments, which is not described herein again.

In the description of the embodiments of present invention, unless otherwise clearly specified and limited, the terms "mounted", "connected" and "connect" should be interpreted broadly. For example, the term "connect" may be fixed connection, detachable connection or integral construction. As an alternative, the term "connect" may be mechanical connection, or electrical connection. As an alternative, the term "connect" may be direct connection, or indirect connection through a medium, or communication in two elements. For those of ordinary skill in the art, specific meanings of the above mentioned terms In the present invention may be understood according to a specific condition.

## Claims

1. A parking redundancy control method, applicable to an automatic driving system, wherein a plurality of components in the automatic driving system comprise: an automatic driving main controller, an automatic driving auxiliary controller, a main brake controller, a backup brake controller, an electronic parking controller, a P-gear (Parking-gear) controller, a gateway, and a Controller Area Network (CAN) communication network; the CAN communication network comprises: an intelligent driving main CAN, a chassis main CAN, and a chassis backup CAN;
**characterized in that** the method comprises:
after a vehicle is determined to be parked, simultaneously sending (S101), by the automatic driving main controller and the automatic driving auxiliary controller, a first safe parking request to the main brake controller, wherein the first safe parking request comprises: a parking instruction that is sent by the automatic driving main controller and the automatic driving auxiliary controller by means of the intelligent driving main CAN, the gateway, and the chassis main CAN sequentially, and a parking instruction that is sent by the automatic driving main controller by means of the chassis backup CAN;
determining (S102) whether the plurality of components in the automatic driving system are in a regular state;
in response to a determination result indicating that the plurality of components are in the regular state, sending (S103), by the main brake controller, an electronic parking request to the electronic parking controller based on the first safe parking request, and sending a P-gear request to the P-gear controller, to cause the automatic driving system to complete a vehicle parking action; and
in response to the determination result indicating that any one of the plurality of components is in an abnormal state, executing (S104) a parking redundancy response.

2. The method as claimed in claim 1, wherein in a case that the automatic driving main controller fails, the parking redundancy response comprises:
sending, by the automatic driving auxiliary controller, a second safe parking request to the main brake controller, wherein the second safe parking request comprises a parking instruction that is sent by the automatic driving auxiliary controller sequentially by means of the intelligent driving main CAN, the gateway, and the chassis main CAN;
sending, by the main brake controller, the electronic parking request to the electronic parking controller based on the second safe parking request, and sending, by the main brake controller, the P-gear request to the P-gear controller, to cause the automatic driving system to complete the vehicle parking action, wherein the CAN communication network further comprises a power CAN; and
sending, by the main brake controller, the P-gear request to the P-gear controller sequentially by means of the chassis main CAN, the gateway, and the power CAN, and simultaneously sending, by the main brake controller, the P-gear request to the P-gear controller by means of the chassis backup CAN.

3. The method as claimed in claim 1, wherein in a case that the automatic driving auxiliary controller fails, the parking redundancy response comprises:
sending, by the automatic driving main controller, a third safe parking request to the main brake controller, wherein the third safe parking request comprises a parking instruction that is sent by the automatic driving main controller sequentially by means of the intelligent driving main CAN, the gateway, and the chassis main CAN, and a parking instruction that is sent by the automatic driving main controller by means of the chassis backup CAN;
sending, by the main brake controller, the electronic parking request to the electronic parking controller based on the third safe parking request, and sending, by the main brake controller, the P-gear request to the P-gear controller, to cause the automatic driving system to complete the vehicle parking action, wherein the CAN communication network further comprises a power CAN; and
sending, by the main brake controller, the P-gear request to the P-gear controller sequentially by means of the chassis main CAN, the gateway, and the power CAN, and simultaneously sending, by the main brake controller, the P-gear request to the P-gear controller by means of the chassis backup CAN.

4. The method as claimed in claim 1, wherein in a case that the gateway fails, the parking redundancy response comprises:
sending, by the automatic driving main controller, a fourth safe parking request to the main brake controller, wherein the fourth safe parking request comprises a parking instruction that is sent by the automatic driving main controller by means of the chassis backup CAN;
sending, by the main brake controller, the electronic parking request to the electronic parking controller based on the fourth safe parking request, and sending, by the main brake controller, the P-gear request to the P-gear controller, to cause the automatic driving system to complete the vehicle parking action; and sending, by the main brake controller, the P-gear request to the P-gear controller by means of the chassis backup CAN.

5. The method as claimed in claim 1, wherein in a case that the intelligent driving main CAN fails, the parking redundancy response comprises:
sending, by the automatic driving main controller, a fifth safe parking request to the main brake controller, wherein the fifth safe parking request comprises a parking instruction that is sent by the automatic driving main controller by means of the chassis backup CAN;
sending, by the main brake controller, the electronic parking request to the electronic parking controller based on the fifth safe parking request, and sending, by the main brake controller, the P-gear request to the P-gear controller, to cause the automatic driving system to complete the vehicle parking action, wherein the CAN communication network further comprises a power CAN; and
sending, by the main brake controller, the P-gear request to the P-gear controller sequentially by means of the chassis main CAN, the gateway, and the power CAN, and simultaneously sending, by the main brake controller, the P-gear request to the P-gear controller by means of the chassis backup CAN.

6. The method as claimed in claim 1, wherein in a case that the main brake controller fails, the parking redundancy response comprises:
simultaneously sending, by the automatic driving main controller and the automatic driving auxiliary controller, a sixth safe parking request to the backup brake controller, wherein the sixth safe parking request comprises: a parking instruction that is sent by the automatic driving main controller and the automatic driving auxiliary controller by means of the intelligent driving main CAN, the gateway, and the chassis main CAN sequentially, and a parking instruction that is sent by the automatic driving main controller by means of the chassis backup CAN;
sending, by the backup brake controller, the electronic parking request to the electronic parking controller based on the sixth safe parking request, and sending, by the backup brake controller, the P-gear request to the P-gear controller, to cause the automatic driving system to complete the vehicle parking action, wherein the CAN communication network further comprises a power CAN; and
sending, by the backup brake controller, the electronic parking request to the electronic parking controller by means of the chassis main CAN and the chassis backup CAN, sending, by the backup brake controller, the P-gear request to the P-gear controller sequentially by means of the chassis main CAN, the gateway, and the power CAN, and simultaneously sending, by the backup brake controller the P-gear request to the P-gear controller by means of the chassis backup CAN.

7. The method as claimed in claim 1, wherein in a case that the backup brake controller fails, the parking redundancy response comprises:
simultaneously sending, by the automatic driving main controller and the automatic driving auxiliary controller, a seventh safe parking request to the main brake controller, wherein the seventh safe parking request comprises: a parking instruction that is sent by the automatic driving main controller and the automatic driving auxiliary controller by means of the intelligent driving main CAN, the gateway, and the chassis main CAN sequentially, and a parking instruction that is sent by the automatic driving main controller by means of the chassis backup CAN;
sending, by the main brake controller, the electronic parking request to the electronic parking controller based on the seventh safe parking request, and sending, by the main brake controller, the P-gear request to the P-gear controller, to cause the automatic driving system to complete the vehicle parking action, wherein the CAN communication network further comprises a power CAN; and
sending, by the main brake controller, the P-gear request to the P-gear controller sequentially by means of the chassis main CAN, the gateway, and the power CAN, and simultaneously sending, by the main brake controller, the P-gear request to the P-gear controller by means of the chassis backup CAN.

8. The method as claimed in claim 1, wherein in a case that the electronic parking controller fails, the parking redundancy response comprises:
simultaneously sending, by the automatic driving main controller and the automatic driving auxiliary controller, an eighth safe parking request to the main brake controller, wherein the eighth safe parking request comprises: a parking instruction that is sent by the automatic driving main controller and the automatic driving auxiliary controller by means of the intelligent driving main CAN, the gateway, and the chassis main CAN sequentially, and a parking instruction that is sent by the automatic driving main controller by means of the chassis backup CAN;
sending, by the main brake controller, the P-gear request to the P-gear controller based on the eighth safe parking request, to cause the automatic driving system to complete the vehicle parking action, wherein the CAN communication network further comprises a power CAN; and
sending, by the main brake controller, the P-gear request to the P-gear controller sequentially by means of the chassis main CAN, the gateway, and the power CAN, and simultaneously sending, by the main brake controller, the P-gear request to the P-gear controller by means of the chassis backup CAN.

9. The method as claimed in claim 1, wherein in a case that the P-gear controller fails, the parking redundancy response comprises:
simultaneously sending, by the automatic driving main controller and the automatic driving auxiliary controller, a ninth safe parking request to the main brake controller, wherein the ninth safe parking request comprises: a parking instruction that is sent by the automatic driving main controller and the automatic driving auxiliary controller sequentially by means of the intelligent driving main CAN, the gateway, and the chassis main CAN, and a parking instruction that is sent by the automatic driving main controller by means of the chassis backup CAN; and
sending, by the main brake controller, the electronic parking request to the electronic parking controller based on the ninth safe parking request, to cause the automatic driving system to complete the vehicle parking action.

10. The method as claimed in claim 1, wherein the CAN communication network further comprises a power CAN, and in a case that the power CAN fails, the parking redundancy response comprises:
simultaneously sending, by the automatic driving main controller and the automatic driving auxiliary controller, a tenth safe parking request to the main brake controller, wherein the tenth safe parking request comprises: a parking instruction that is sent by the automatic driving main controller and the automatic driving auxiliary controller sequentially by means of the intelligent driving main CAN, the gateway, and the chassis main CAN, and a parking instruction that is sent by the automatic driving main controller by means of the chassis backup CAN;
sending, by the main brake controller, the electronic parking request to the electronic parking controller based on the tenth safe parking request, and sending, by the main brake controller, the P-gear request to the P-gear controller, to cause the automatic driving system to complete the vehicle parking action; and
sending, by the main brake controller, the P-gear request to the P-gear controller by means of the chassis backup CAN.

11. The method as claimed in claim 1, wherein in a case that the chassis main CAN fails, the parking redundancy response comprises:
sending, by the automatic driving main controller, an eleventh safe parking request to the main brake controller, wherein the eleventh safe parking request comprises a parking instruction that is sent by the automatic driving main controller by means of the chassis backup CAN;
sending, by the main brake controller, the electronic parking request to the electronic parking controller based on the eleventh safe parking request, and sending, by the main brake controller, the P-gear request to the P-gear controller, to cause the automatic driving system to complete the vehicle parking action; and
sending, by the main brake controller, the P-gear request to the P-gear controller by means of the chassis backup CAN.

12. The method as claimed in claim 1, wherein in a case that the chassis backup CAN fails, the parking redundancy response comprises:
simultaneously sending, by the automatic driving main controller and the automatic driving auxiliary controller, a twelfth safe parking request to the main brake controller, wherein the twelfth safe parking request comprises a parking instruction that is sent by the automatic driving main controller and the automatic driving auxiliary controller sequentially by means of the intelligent driving main CAN, the gateway, and the chassis main CAN;
sending, by the main brake controller, the electronic parking request to the electronic parking controller based on the twelfth safe parking request, and sending, by the main brake controller, the P-gear request to the P-gear controller, to cause the automatic driving system to complete the vehicle parking action, wherein the CAN communication network further comprises a power CAN; and
sending, by the main brake controller, the P-gear request to the P-gear controller sequentially by means of the chassis main CAN, the gateway, and the power CAN.

13. An automatic driving system (700), configured to execute the method as claimed in any one of claims 1 to 12.

14. A driving device (800), comprising an automatic driving system (700) according to claim 13.

## Patentansprüche

1. Redundanzsteuerungsverfahren zum Parken, das auf ein automatisches Fahrsystem anwendbar ist, wobei eine Vielzahl von Komponenten in dem automatischen Fahrsystem Folgendes umfasst: eine Hauptsteuerung für das automatische Fahren, eine Hilfssteuerung für das automatische Fahren, eine Hauptbremssteuerung, eine Reservebremssteuerung, eine elektronische Parksteuerung, eine P-Getriebe-Steuerung (Park-Getriebe), ein Gateway und ein Kommunikationsnetzwerk des Steuerbereichsnetzwerks (CAN); das CAN-Kommunikationsnetzwerk umfasst Folgendes: einen intelligenten Fahr-Haupt-CAN, einen Chassis-Haupt-CAN und einen Chassis-Backup-CAN;
**dadurch gekennzeichnet, dass** das Verfahren Folgendes umfasst:
nachdem bestimmt wurde, dass ein Fahrzeug geparkt ist, gleichzeitiges Senden (S101) einer ersten sicheren Parkanfrage an die Hauptbremssteuerung durch die Hauptsteuerung für automatisches Fahren und die Hilfssteuerung für automatisches Fahren, wobei die erste sichere Parkanfrage Folgendes umfasst: eine Parkanweisung, die von der Hauptsteuerung für automatisches Fahren und der Hilfssteuerung für automatisches Fahren mittels des intelligenten Fahrt-Haupt-CAN, des Gateways und des Chassis-Haupt-CAN nacheinander gesendet wird, und eine Parkanweisung, die von der Hauptsteuerung für automatisches Fahren mittels des Chassis-Backup-CAN gesendet wird;
Bestimmen (S102), ob sich die mehreren Komponenten des automatischen Fahrsystems in einem regulären Zustand befinden;
als Reaktion auf ein Bestimmungsergebnis, das angibt, dass sich die Vielzahl von Komponenten im regulären Zustand befindet, Senden (S103) einer elektronischen Parkanfrage durch die Hauptbremssteuerung an die elektronische Parksteuerung, basierend auf der ersten sicheren Parkanfrage, und Senden einer P-Getriebeanfrage an die P-Getriebesteuerung, um das automatische Fahrsystem zu veranlassen, eine Fahrzeugparkaktion abzuschließen; und
als Reaktion auf das Bestimmungsergebnis, das angibt, dass sich eine der Vielzahl von Komponenten in einem anormalen Zustand befindet, Ausführen (S104) einer Parkredundanzreaktion.

2. Verfahren nach Anspruch 1, wobei in einem Fall, in dem die Hauptsteuerung für das automatische Fahren ausfällt, die Parkredundanzreaktion Folgendes umfasst:
Senden einer zweiten sicheren Parkanfrage durch die automatische Fahrhilfssteuerung an die Hauptbremssteuerung, wobei die zweite sichere Parkanfrage eine Parkanweisung umfasst, die von der automatischen Fahrhilfssteuerung sequentiell über den intelligenten Fahr-Haupt-CAN, das Gateway und den Chassis-Haupt-CAN gesendet wird;
Senden der elektronischen Parkanfrage durch die Hauptbremssteuerung an die elektronische Parksteuerung basierend auf der zweiten sicheren Parkanfrage, und Senden der P-Getriebeanfrage durch die Hauptbremssteuerung an die P-Getriebesteuerung, um das automatische Fahrsystem zu veranlassen, die Fahrzeugparkaktion abzuschließen, wobei das CAN-Kommunikationsnetzwerk ferner ein Leistungs-CAN umfasst; und
Senden der P-Getriebeanfrage durch die Hauptbremssteuerung an die P-Getriebesteuerung sequentiell über den Chassis-Haupt-CAN, das Gateway und den Leistungs-CAN, und gleichzeitiges Senden der P-Getriebeanfrage durch die Hauptbremssteuerung an die P-Getriebesteuerung über den Chassis-Backup-CAN.

3. Verfahren nach Anspruch 1, wobei in einem Fall, in dem die Hilfssteuerung für das automatische Fahren ausfällt, die Parkredundanzreaktion Folgendes umfasst:
Senden einer dritten sicheren Parkanfrage an die Hauptbremssteuerung durch die automatische Hauptfahrsteuerung, wobei die dritte sichere Parkanfrage eine Parkanweisung umfasst, die von der automatischen Hauptfahrsteuerung nacheinander über den intelligenten Fahr-Haupt-CAN, das Gateway und den Chassis-Haupt-CAN gesendet wird, sowie eine Parkanweisung, die von der automatischen Hauptfahrsteuerung über den Chassis-Backup-CAN gesendet wird;
Senden der elektronischen Parkanfrage durch die Hauptbremssteuerung an die elektronische Parksteuerung basierend auf der dritten sicheren Parkanfrage, und Senden der P-Getriebeanfrage durch die Hauptbremssteuerung an die P-Getriebesteuerung, um das automatische Fahrsystem zu veranlassen, die Fahrzeugparkaktion abzuschließen, wobei das CAN-Kommunikationsnetzwerk ferner ein Leistungs-CAN umfasst; und
Senden der P-Getriebeanfrage durch die Hauptbremssteuerung an die P-Getriebesteuerung sequentiell über den Chassis-Haupt-CAN, das Gateway und den Leistungs-CAN, und gleichzeitiges Senden der P-Getriebeanfrage durch die Hauptbremssteuerung an die P-Getriebesteuerung über den Chassis-Backup-CAN.

4. Verfahren nach Anspruch 1, wobei in einem Fall, in dem das Gateway ausfällt, die Parkredundanzantwort Folgendes umfasst:
Senden einer vierten sicheren Parkanfrage an die Hauptbremssteuerung durch die automatische Hauptsteuerung, wobei die vierte sichere Parkanfrage eine Parkanweisung umfasst, die von der automatischen Hauptsteuerung über den Chassis-Backup-CAN gesendet wird;
Senden der elektronischen Parkanfrage durch die Hauptbremssteuerung an die elektronische Parksteuerung basierend auf der vierten sicheren Parkanfrage, und Senden der P-Getriebeanfrage durch die Hauptbremssteuerung an die P-Getriebesteuerung, um das automatische Fahrsystem zu veranlassen, die Fahrzeugparkaktion abzuschließen; und das Senden der P-Getriebeanfrage durch die Hauptbremssteuerung an die P-Getriebesteuerung über den Chassis-Backup-CAN.

5. Verfahren nach Anspruch 1, wobei in einem Fall, in dem das intelligente Fahr-Haupt-CAN ausfällt, die Redundanzreaktion auf das Parken Folgendes umfasst:
Senden einer fünften sicheren Parkanfrage an die Hauptbremssteuerung durch die automatische Hauptsteuerung, wobei die fünfte sichere Parkanfrage eine Parkanweisung umfasst, die von der automatischen Hauptsteuerung über den Chassis-Backup-CAN gesendet wird;
Senden der elektronischen Parkanfrage durch die Hauptbremssteuerung an die elektronische Parksteuerung basierend auf der fünften sicheren Parkanfrage, und Senden der P-Getriebeanfrage durch die Hauptbremssteuerung an die P-Getriebesteuerung, um das automatische Fahrsystem zu veranlassen, die Fahrzeugparkaktion abzuschließen, wobei das CAN-Kommunikationsnetzwerk ferner ein Leistungs-CAN umfasst; und
Senden der P-Getriebeanfrage durch die Hauptbremssteuerung an die P-Getriebesteuerung sequentiell über den Chassis-Haupt-CAN, das Gateway und den Leistungs-CAN, und gleichzeitiges Senden der P-Getriebeanfrage durch die Hauptbremssteuerung an die P-Getriebesteuerung über den Chassis-Backup-CAN.

6. Verfahren nach Anspruch 1, wobei in einem Fall, in dem die Hauptbremssteuerung ausfällt, die Parkredundanzreaktion Folgendes umfasst:
gleichzeitiges Senden einer ersten sicheren Parkanfrage an die Hauptbremssteuerung durch die Hauptsteuerung für automatisches Fahren und die Hilfssteuerung für automatisches Fahren, wobei die erste sichere Parkanfrage Folgendes umfasst: eine Parkanweisung, die von der Hauptsteuerung für automatisches Fahren und der Hilfssteuerung für automatisches Fahren mittels des intelligenten Fahrt-Haupt-CAN, des Gateways und des Chassis-Haupt-CAN nacheinander gesendet wird, und eine Parkanweisung, die von der Hauptsteuerung für automatisches Fahren mittels des Chassis-Backup-CAN gesendet wird;
Senden der elektronischen Parkanfrage an die elektronische Parksteuerung durch die Zusatzbremssteuerung, basierend auf der sechsten sicheren Parkanfrage, und Senden der P-Getriebeanfrage an die P-Getriebesteuerung durch die Zusatzbremssteuerung, um das automatische Fahrsystem zu veranlassen, die Fahrzeugparkaktion abzuschließen, wobei das CAN-Kommunikationsnetzwerk ferner ein Leistungs-CAN umfasst; und
Senden der elektronischen Parkanfrage an die elektronische Parksteuerung durch die Backup-Bremssteuerung über den Chassis-Haupt-CAN und den Chassis-Backup-CAN, Senden der P-Getriebeanfrage an die P-Getriebesteuerung durch die Backup-Bremssteuerung sequentiell über den Chassis-Haupt-CAN, das Gateway und den Leistungs-CAN, und gleichzeitiges Senden der P-Getriebeanfrage an die P-Getriebesteuerung durch die Backup-Bremssteuerung über den Chassis-Backup-CAN.

7. Verfahren nach Anspruch 1, wobei in einem Fall, in dem die Backup-Bremssteuerung ausfällt, die Parkredundanzreaktion Folgendes umfasst:
gleichzeitiges Senden einer siebten sicheren Parkanfrage an die Hauptbremssteuerung durch die automatische Hauptfahrsteuerung und die automatische Fahrhilfssteuerung, wobei die siebte sichere Parkanfrage Folgendes umfasst: eine Parkanweisung, die von der automatischen Hauptfahrsteuerung und der automatischen Fahrhilfssteuerung über den intelligenten Fahrt-Haupt-CAN, das Gateway und den Chassis-Haupt-CAN nacheinander gesendet wird, und eine Parkanweisung, die von der automatischen Hauptfahrsteuerung über den Chassis-Backup-CAN gesendet wird;
Senden der elektronischen Parkanfrage durch die Hauptbremssteuerung an die elektronische Parksteuerung basierend auf der siebten sicheren Parkanfrage, und Senden der P-Getriebeanfrage durch die Hauptbremssteuerung an die P-Getriebesteuerung, um das automatische Fahrsystem zu veranlassen, die Fahrzeugparkaktion abzuschließen, wobei das CAN-Kommunikationsnetzwerk ferner ein Leistungs-CAN umfasst; und
Senden der P-Getriebeanfrage durch die Hauptbremssteuerung an die P-Getriebesteuerung sequentiell über den Chassis-Haupt-CAN, das Gateway und den Leistungs-CAN, und gleichzeitiges Senden der P-Getriebeanfrage durch die Hauptbremssteuerung an die P-Getriebesteuerung über den Chassis-Backup-CAN.

8. Verfahren nach Anspruch 1, wobei in einem Fall, in dem die elektronische Parksteuerung ausfällt, die Parkredundanzreaktion Folgendes umfasst:
gleichzeitiges Senden einer achten sicheren Parkanfrage an die Hauptbremssteuerung durch die automatische Hauptfahrsteuerung und die automatische Fahrhilfssteuerung, wobei die achte sichere Parkanfrage Folgendes umfasst: eine Parkanweisung, die von der automatischen Hauptfahrsteuerung und der automatischen Fahrhilfssteuerung über den intelligenten Fahrt-Haupt-CAN, das Gateway und den Chassis-Haupt-CAN nacheinander gesendet wird, und eine Parkanweisung, die von der automatischen Hauptfahrsteuerung über den Chassis-Backup-CAN gesendet wird;
Senden der P-Getriebeanfrage durch die Hauptbremssteuerung an die P-Getriebesteuerung basierend auf der achten sicheren Parkanfrage, um das automatische Fahrsystem zu veranlassen, den Fahrzeugparkvorgang abzuschließen, wobei das CAN-Kommunikationsnetzwerk ferner ein Leistungs-CAN umfasst; und
Senden der P-Getriebeanfrage durch die Hauptbremssteuerung an die P-Getriebesteuerung sequentiell über den Chassis-Haupt-CAN, das Gateway und den Leistungs-CAN, und gleichzeitiges Senden der P-Getriebeanfrage durch die Hauptbremssteuerung an die P-Getriebesteuerung über den Chassis-Backup-CAN.

9. Verfahren nach Anspruch 1, wobei in einem Fall, in dem die P-Getriebesteuerung ausfällt, die Parkredundanzreaktion Folgendes umfasst:
gleichzeitiges Senden einer achten sicheren Parkanfrage an die Hauptbremssteuerung durch die automatische Hauptfahrsteuerung und die automatische Fahrhilfssteuerung, wobei die neunte sichere Parkanfrage Folgendes umfasst: eine Parkanweisung, die von der automatischen Hauptfahrsteuerung und der automatischen Fahrhilfssteuerung über den intelligenten Fahrt-Haupt-CAN, das Gateway und den Chassis-Haupt-CAN nacheinander gesendet wird, und eine Parkanweisung, die von der automatischen Hauptfahrsteuerung über den Chassis-Backup-CAN gesendet wird; und
Senden der elektronischen Parkanfrage durch die Hauptbremssteuerung an die elektronische Parksteuerung, basierend auf der neunten sicheren Parkanfrage, um das automatische Fahrsystem zu veranlassen, den Fahrzeugparkvorgang abzuschließen.

10. Verfahren nach Anspruch 1, wobei das CAN-Kommunikationsnetzwerk ferner einen Leistungs-CAN umfasst und in einem Fall, in dem der Leistungs-CAN ausfällt, die Parkredundanzreaktion Folgendes umfasst:
gleichzeitiges Senden einer zehnten sicheren Parkanfrage an die Hauptbremssteuerung durch die automatische Hauptfahrsteuerung und die automatische Fahrhilfssteuerung, wobei die zehnte sichere Parkanfrage Folgendes umfasst: eine Parkanweisung, die von der automatischen Hauptfahrsteuerung und der automatischen Fahrhilfssteuerung über den intelligenten Fahrt-Haupt-CAN, das Gateway und den Chassis-Haupt-CAN nacheinander gesendet wird, und eine Parkanweisung, die von der automatischen Hauptfahrsteuerung über den Chassis-Backup-CAN gesendet wird;
Senden der elektronischen Parkanfrage durch die Hauptbremssteuerung an die elektronische Parksteuerung basierend auf der zehnten sicheren Parkanfrage, und Senden der P-Getriebeanfrage durch die Hauptbremssteuerung an die P-Getriebesteuerung, um das automatische Fahrsystem zu veranlassen, die Fahrzeugparkaktion abzuschließen; und
Senden der P-Getriebeanfrage durch die Hauptbremssteuerung an die P-Getriebesteuerung über den Chassis-Backup-CAN.

11. Verfahren nach Anspruch 1, wobei in einem Fall, in dem die Chassis-Haupt-CAN ausfällt, die Parkredundanzreaktion Folgendes umfasst:
Senden einer elften sicheren Parkanfrage an die Hauptbremssteuerung durch die automatische Hauptsteuerung, wobei die elfte sichere Parkanfrage eine Parkanweisung umfasst, die von der automatischen Hauptsteuerung über den Chassis-Backup-CAN gesendet wird;
Senden der elektronischen Parkanfrage durch die Hauptbremssteuerung an die elektronische Parksteuerung basierend auf der elften sicheren Parkanfrage, und Senden der P-Getriebeanfrage durch die Hauptbremssteuerung an die P-Getriebesteuerung, um das automatische Fahrsystem zu veranlassen, die Fahrzeugparkaktion abzuschließen; und
Senden der P-Getriebeanfrage durch die Hauptbremssteuerung an die P-Getriebesteuerung über den Chassis-Backup-CAN.

12. Verfahren nach Anspruch 1, wobei in einem Fall, in dem das Chassis-Backup-CAN ausfällt, die Parkredundanzreaktion Folgendes umfasst:
gleichzeitiges Senden einer zwölften sicheren Parkanfrage an die Hauptbremssteuerung durch die automatische Hauptfahrsteuerung und die automatische Fahrhilfssteuerung, wobei die zwölfte sichere Parkanfrage eine Parkanweisung umfasst, die von der automatischen Hauptfahrsteuerung und der automatischen Fahrhilfssteuerung nacheinander über den intelligenten Fahrt-Haupt-CAN, das Gateway und den Chassis-Haupt-CAN gesendet wird;
Senden der elektronischen Parkanfrage durch die Hauptbremssteuerung an die elektronische Parksteuerung basierend auf der zwölften sicheren Parkanfrage, und Senden der P-Getriebeanfrage durch die Hauptbremssteuerung an die P-Getriebesteuerung, um das automatische Fahrsystem zu veranlassen, die Fahrzeugparkaktion abzuschließen, wobei das CAN-Kommunikationsnetzwerk ferner ein Leistungs-CAN umfasst; und
Senden der P-Getriebeanfrage durch die Hauptbremssteuerung an die P-Getriebesteuerung nacheinander über den Chassis-Haupt-CAN, das Gateway und den Leistungs-CAN.

13. Automatisches Fahrsystem (700), das konfiguriert ist, um das Verfahren nach einem der Ansprüche 1 bis 12 auszuführen.

14. Fahrvorrichtung (800), umfassend ein automatisches Fahrsystem (700) nach Anspruch 13.

## Revendications

1. Procédé de commande de redondance de stationnement, applicable à un système de conduite automatique, dans lequel une pluralité de composants dans le système de conduite automatique comprennent : un dispositif de commande principal de conduite automatique, un dispositif de commande auxiliaire de conduite automatique, un dispositif de commande de frein principal, un dispositif de commande de frein de secours, un dispositif de commande de stationnement électronique, un dispositif de commande de vitesse P (vitesse de stationnement), une passerelle et un réseau de communication de réseau de zone de contrôleur (CAN) ; le réseau de communication CAN comprend : un CAN principal de conduite intelligente, un CAN principal de châssis et un CAN de secours de châssis ;
**caractérisé en ce que** le procédé comprend :
après qu'il a été déterminé qu'un véhicule est stationné, l'envoi simultané (S101), par le dispositif de commande principal de conduite automatique et le dispositif de commande auxiliaire de conduite automatique, d'une première demande de stationnement sécurisé au dispositif de commande de frein principal, dans lequel la première demande de stationnement sécurisé comprend : une instruction de stationnement qui est envoyée par le dispositif de commande principal de conduite automatique et le dispositif de commande auxiliaire de conduite automatique au moyen du CAN principal de conduite intelligente, de la passerelle et du CAN principal de châssis séquentiellement, et une instruction de stationnement qui est envoyée par le dispositif de commande principal de conduite automatique au moyen du CAN de secours de châssis ;
le fait de déterminer (S102) si la pluralité de composants dans le système de conduite automatique sont dans un état régulier ;
en réponse à un résultat de détermination indiquant que la pluralité de composants sont dans l'état normal, l'envoi (S103), par le dispositif de commande de frein principal, d'une demande de stationnement électronique au dispositif de commande de stationnement électronique sur la base de la première demande de stationnement sécurisé, et l'envoi d'une demande de vitesse P au dispositif de commande de vitesse P, pour amener le système de conduite automatique à terminer une action de stationnement de véhicule ; et
en réponse au résultat de détermination indiquant que l'un quelconque de la pluralité de composants est dans un état anormal, l'exécution (S104) d'une réponse de redondance de stationnement.

2. Procédé selon la revendication 1, dans lequel, en cas de défaillance du dispositif de commande principal de conduite automatique, la réponse de redondance de stationnement comprend :
l'envoi, par le dispositif de commande auxiliaire de conduite automatique, d'une deuxième demande de stationnement sécurisé au dispositif de commande de frein principal, dans lequel la deuxième demande de stationnement sécurisé comprend une instruction de stationnement qui est envoyée par le dispositif de commande auxiliaire de conduite automatique séquentiellement au moyen du CAN principal de conduite intelligente, de la passerelle et du CAN principal de châssis ;
l'envoi, par le dispositif de commande de frein principal, de la demande de stationnement électronique au dispositif de commande de stationnement électronique sur la base de la deuxième demande de stationnement sécurisé, et l'envoi, par le dispositif de commande de frein principal, de la demande de vitesse P au dispositif de commande de vitesse P, pour amener le système de conduite automatique à terminer l'action de stationnement de véhicule, dans lequel le réseau de communication CAN comprend en outre un CAN de puissance ; et
l'envoi, par le dispositif de commande de frein principal, de la demande de vitesse P au dispositif de commande de vitesse P séquentiellement au moyen du CAN principal de châssis, de la passerelle et du CAN de puissance, et l'envoi simultané, par le dispositif de commande de frein principal, de la demande de vitesse P au dispositif de commande de vitesse P au moyen du CAN de secours de châssis.

3. Procédé selon la revendication 1, dans lequel, en cas de défaillance du dispositif de commande auxiliaire de conduite automatique, la réponse de redondance de stationnement comprend :
l'envoi, par le dispositif de commande principal de conduite automatique, d'une troisième demande de stationnement sécurisé au dispositif de commande de frein principal, dans lequel la troisième demande de stationnement sécurisé comprend une instruction de stationnement qui est envoyée par le dispositif de commande principal de conduite automatique séquentiellement au moyen du CAN principal de conduite intelligente, de la passerelle et du CAN principal de châssis, et une instruction de stationnement qui est envoyée par le dispositif de commande principal de conduite automatique au moyen du CAN de secours de châssis ;
l'envoi, par le dispositif de commande de frein principal, de la demande de stationnement électronique au dispositif de commande de stationnement électronique sur la base de la troisième demande de stationnement sécurisé, et l'envoi, par le dispositif de commande de frein principal, de la demande de vitesse P au dispositif de commande de vitesse P, pour amener le système de conduite automatique à terminer l'action de stationnement de véhicule, dans lequel le réseau de communication CAN comprend en outre un CAN de puissance ; et
l'envoi, par le dispositif de commande de frein principal, de la demande de vitesse P au dispositif de commande de vitesse P séquentiellement au moyen du CAN principal de châssis, de la passerelle et du CAN de puissance, et l'envoi simultané, par le dispositif de commande de frein principal, de la demande de vitesse P au dispositif de commande de vitesse P au moyen du CAN de secours de châssis.

4. Procédé selon la revendication 1, dans lequel, en cas de défaillance de la passerelle, la réponse de redondance de stationnement comprend :
l'envoi, par le dispositif de commande principal de conduite automatique, d'une quatrième demande de stationnement sécurisé au dispositif de commande de frein principal, dans lequel la quatrième demande de stationnement sécurisé comprend une instruction de stationnement qui est envoyée par le dispositif de commande principal de conduite automatique au moyen du CAN de secours de châssis ;
l'envoi, par le dispositif de commande de frein principal, de la demande de stationnement électronique au dispositif de commande de stationnement électronique sur la base de la quatrième demande de stationnement sécurisé, et l'envoi, par le dispositif de commande de frein principal, de la demande de vitesse P au dispositif de commande de vitesse P, pour amener le système de conduite automatique à terminer l'action de stationnement de véhicule ; et l'envoi, par le dispositif de commande de frein principal, de la demande de vitesse P au dispositif de commande de vitesse P au moyen du CAN de secours de châssis.

5. Procédé selon la revendication 1, dans lequel, en cas de défaillance du CAN principal de conduite intelligente, la réponse de redondance de stationnement comprend :
l'envoi, par le dispositif de commande principal de conduite automatique, d'une cinquième demande de stationnement sécurisé au dispositif de commande de frein principal, dans lequel la cinquième demande de stationnement sécurisé comprend une instruction de stationnement qui est envoyée par le dispositif de commande principal de conduite automatique au moyen du CAN de secours de châssis ;
l'envoi, par le dispositif de commande de frein principal, de la demande de stationnement électronique au dispositif de commande de stationnement électronique sur la base de la cinquième demande de stationnement sécurisé, et l'envoi, par le dispositif de commande de frein principal, de la demande de vitesse P au dispositif de commande de vitesse P, pour amener le système de conduite automatique à terminer l'action de stationnement de véhicule, dans lequel le réseau de communication CAN comprend en outre un CAN de puissance ; et
l'envoi, par le dispositif de commande de frein principal, de la demande de vitesse P au dispositif de commande de vitesse P séquentiellement au moyen du CAN principal de châssis, de la passerelle et du CAN de puissance, et l'envoi simultané, par le dispositif de commande de frein principal, de la demande de vitesse P au dispositif de commande de vitesse P au moyen du CAN de secours de châssis.

6. Procédé selon la revendication 1, dans lequel, en cas de défaillance du dispositif de commande de frein principal, la réponse de redondance de stationnement comprend :
l'envoi simultané, par le dispositif de commande principal de conduite automatique et le dispositif de commande auxiliaire de conduite automatique, d'une sixième demande de stationnement sécurisé au dispositif de commande de frein de secours, dans lequel la sixième demande de stationnement sécurisé comprend : une instruction de stationnement qui est envoyée par le dispositif de commande principal de conduite automatique et le dispositif de commande auxiliaire de conduite automatique au moyen du CAN principal de conduite intelligente, de la passerelle et du CAN principal de châssis séquentiellement, et une instruction de stationnement qui est envoyée par le dispositif de commande principal de conduite automatique au moyen du CAN de secours de châssis ;
l'envoi, par le dispositif de commande de frein de secours, de la demande de stationnement électronique au dispositif de commande de stationnement électronique sur la base de la sixième demande de stationnement sécurisé, et l'envoi, par le dispositif de commande de frein de secours, de la demande de vitesse P au dispositif de commande de vitesse P, pour amener le système de conduite automatique à terminer l'action de stationnement de véhicule, dans lequel le réseau de communication CAN comprend en outre un CAN de puissance ; et
l'envoi, par le dispositif de commande de frein de secours, de la demande de stationnement électronique au dispositif de commande de stationnement électronique au moyen du CAN principal de châssis et du CAN de secours de châssis, l'envoi, par le dispositif de commande de frein de secours, de la demande de vitesse P au dispositif de commande de vitesse P séquentiellement au moyen du CAN principal de châssis, de la passerelle et du CAN de puissance, et l'envoi simultané, par le dispositif de commande de frein de secours, de la demande de vitesse P au dispositif de commande de vitesse P au moyen du CAN de secours de châssis.

7. Procédé selon la revendication 1, dans lequel, en cas de défaillance du dispositif de commande de frein de secours, la réponse de redondance de stationnement comprend :
l'envoi simultané, par le dispositif de commande principal de conduite automatique et le dispositif de commande auxiliaire de conduite automatique, d'une septième demande de stationnement sécurisé au dispositif de commande de frein principal, dans lequel la septième demande de stationnement sécurisé comprend : une instruction de stationnement qui est envoyée par le dispositif de commande principal de conduite automatique et le dispositif de commande auxiliaire de conduite automatique au moyen du CAN principal de conduite intelligente, de la passerelle, et du CAN principal de châssis séquentiellement, et une instruction de stationnement qui est envoyée par le dispositif de commande principal de conduite automatique au moyen du CAN de secours de châssis ;
l'envoi, par le dispositif de commande de frein principal, de la demande de stationnement électronique au dispositif de commande de stationnement électronique sur la base de la septième demande de stationnement sécurisé, et l'envoi, par le dispositif de commande de frein principal, de la demande de vitesse P au dispositif de commande de vitesse P, pour amener le système de conduite automatique à terminer l'action de stationnement de véhicule, dans lequel le réseau de communication CAN comprend en outre un CAN de puissance ; et
l'envoi, par le dispositif de commande de frein principal, de la demande de vitesse P au dispositif de commande de vitesse P séquentiellement au moyen du CAN principal de châssis, de la passerelle et du CAN de puissance, et l'envoi simultané, par le dispositif de commande de frein principal, de la demande de vitesse P au dispositif de commande de vitesse P au moyen du CAN de secours de châssis.

8. Procédé selon la revendication 1, dans lequel, en cas de défaillance du dispositif de commande de stationnement électronique, la réponse de redondance de stationnement comprend :
l'envoi simultané, par le dispositif de commande principal de conduite automatique et le dispositif de commande auxiliaire de conduite automatique, d'une huitième demande de stationnement sécurisé au dispositif de commande de frein principal, dans lequel la huitième demande de stationnement sécurisé comprend : une instruction de stationnement qui est envoyée par le dispositif de commande principal de conduite automatique et le dispositif de commande auxiliaire de conduite automatique au moyen du CAN principal de conduite intelligente, de la passerelle et du CAN principal de châssis séquentiellement, et une instruction de stationnement qui est envoyée par le dispositif de commande principal de conduite automatique au moyen du CAN de secours de châssis ;
l'envoi, par le dispositif de commande de frein principal, de la demande de vitesse P au dispositif de commande de vitesse P sur la base de la huitième demande de stationnement sécurisé, pour amener le système de conduite automatique à terminer l'action de stationnement de véhicule, dans lequel le réseau de communication CAN comprend en outre un CAN de puissance ; et
l'envoi, par le dispositif de commande de frein principal, de la demande de vitesse P au dispositif de commande de vitesse P séquentiellement au moyen du CAN principal de châssis, de la passerelle et du CAN de puissance, et l'envoi simultané, par le dispositif de commande de frein principal, de la demande de vitesse P au dispositif de commande de vitesse P au moyen du CAN de secours de châssis.

9. Procédé selon la revendication 1, dans lequel, en cas de défaillance du dispositif de commande de vitesse P, la réponse de redondance de stationnement comprend :
l'envoi simultané, par le dispositif de commande principal de conduite automatique et le dispositif de commande auxiliaire de conduite automatique, d'une neuvième demande de stationnement sécurisé au dispositif de commande de frein principal, dans lequel la neuvième demande de stationnement sécurisé comprend : une instruction de stationnement qui est envoyée par le dispositif de commande principal de conduite automatique et le dispositif de commande auxiliaire de conduite automatique séquentiellement au moyen du CAN principal de conduite intelligente, de la passerelle et du CAN principal de châssis, et une instruction de stationnement qui est envoyée par le dispositif de commande principal de conduite automatique au moyen du CAN de secours de châssis ; et
l'envoi, par le dispositif de commande de frein principal, de la demande de stationnement électronique au dispositif de commande de stationnement électronique sur la base de la neuvième demande de stationnement sécurisé, pour amener le système de conduite automatique à terminer l'action de stationnement de véhicule.

10. Procédé selon la revendication 1, dans lequel le réseau de communication CAN comprend en outre un CAN de puissance, et en cas de défaillance du CAN de puissance, la réponse de redondance de stationnement comprend :
l'envoi simultané, par le dispositif de commande principal de conduite automatique et le dispositif de commande auxiliaire de conduite automatique, d'une dixième demande de stationnement sécurisé au dispositif de commande de frein principal, dans lequel la dixième demande de stationnement sécurisé comprend : une instruction de stationnement qui est envoyée par le dispositif de commande principal de conduite automatique et le dispositif de commande auxiliaire de conduite automatique séquentiellement au moyen du CAN principal de conduite intelligente, de la passerelle et du CAN principal de châssis, et une instruction de stationnement qui est envoyée par le dispositif de commande principal de conduite automatique au moyen du CAN de secours de châssis ;
l'envoi, par le dispositif de commande de frein principal, de la demande de stationnement électronique au dispositif de commande de stationnement électronique sur la base de la dixième demande de stationnement sécurisé, et l'envoi, par le dispositif de commande de frein principal, de la demande de vitesse P au dispositif de commande de vitesse P, pour amener le système de conduite automatique à terminer l'action de stationnement de véhicule ; et
l'envoi, par le dispositif de commande de frein principal, de la demande de vitesse P au dispositif de commande de vitesse P au moyen du CAN de secours de châssis.

11. Procédé selon la revendication 1, dans lequel, en cas de défaillance du CAN principal de châssis, la réponse de redondance de stationnement comprend :
l'envoi, par le dispositif de commande principal de conduite automatique, d'une onzième demande de stationnement sécurisé au dispositif de commande de frein principal, dans lequel la onzième demande de stationnement sécurisé comprend une instruction de stationnement qui est envoyée par le dispositif de commande principal de conduite automatique au moyen du CAN de secours de châssis ;
l'envoi, par le dispositif de commande de frein principal, de la demande de stationnement électronique au dispositif de commande de stationnement électronique sur la base de la onzième demande de stationnement sécurisé, et l'envoi, par le dispositif de commande de frein principal, de la demande de vitesse P au dispositif de commande de vitesse P, pour amener le système de conduite automatique à terminer l'action de stationnement de véhicule ; et
l'envoi, par le dispositif de commande de frein principal, de la demande de vitesse P au dispositif de commande de vitesse P au moyen du CAN de secours de châssis.

12. Procédé selon la revendication 1, dans lequel, en cas de défaillance du CAN de secours de châssis, la réponse de redondance de stationnement comprend :
l'envoi simultané, par le dispositif de commande principal de conduite automatique et le dispositif de commande auxiliaire de conduite automatique, d'une douzième demande de stationnement sécurisé au dispositif de commande de frein principal, dans lequel la douzième demande de stationnement sécurisé comprend une instruction de stationnement qui est envoyée par le dispositif de commande principal de conduite automatique et le dispositif de commande auxiliaire de conduite automatique séquentiellement au moyen du CAN principal de conduite intelligente, de la passerelle et du CAN principal de châssis ;
l'envoi, par le dispositif de commande de frein principal, de la demande de stationnement électronique au dispositif de commande de stationnement électronique sur la base de la douzième demande de stationnement sécurisé, et l'envoi, par le dispositif de commande de frein principal, de la demande de vitesse P au dispositif de commande de vitesse P, pour amener le système de conduite automatique à terminer l'action de stationnement de véhicule, dans lequel le réseau de communication CAN comprend en outre un CAN de puissance ; et
l'envoi, par le dispositif de commande de frein principal, de la demande de vitesse P au dispositif de commande de vitesse P séquentiellement au moyen du CAN principal de châssis, de la passerelle et du CAN de puissance.

13. Système de conduite automatique (700), configuré pour exécuter le procédé selon l'une quelconque des revendications 1 à 12.

14. Dispositif de conduite (800), comprenant un système de conduite automatique (700) selon la revendication 13.
